# EUROPEAN PATENT SPECIFICATION

(11) **EP 2 203 517 B1**
(45) Date of publication and mention of the grant of the patent: **17.07.2013**
(21) Application number: 08846989.5
(22) Date of filing: 05.11.2008
(51) Int. Cl.: C08L 33/10, C08L 69/00

(54) **SCRATCH RESISTANT POLYCARBONATE COMPOSITIONS**
KRATZFESTE POLYCARBONATZUSAMMENSETZUNGEN
COMPOSITIONS DE POLYCARBONATE RÉSISTANTES À LA RAYURE

(30) Priority: 09.11.2007 US 937858
(43) Date of publication of application: 07.07.2010
(73) Proprietor: SABIC Innovative Plastics IP B.V., 4612 PX Bergen op Zoom (NL)
(72) Inventor: STEENDAM, Wilhelmus, Johannes, Daniel, 4613 DS Bergen Op Zoom (NL); PUYENBROEK, Robert, 4617 JB Bergen Op Zoom (NL)
(74) Representative: Modiano, Micaela Nadia
(86) International application number: PCT/IB2008/054622
(87) International publication number: WO 2009/060396

(56) References cited:
- EP-A- 0 573 109
- EP-A- 0 590 724
- EP-A- 0 718 348

## Description

### BACKGROUND

This invention is directed to thermoplastic compositions comprising aromatic polycarbonate, their method of manufacture, and method of use thereof, and in particular thermoplastic polycarbonate compositions having improved scratch resistance.

Polycarbonates are useful in the manufacture of articles and components for a wide range of applications, from automotive parts to electronic appliances and parts. Because of their broad use, particularly in electronic applications, it is desirable to provide polycarbonates with scratch resistance.

There nonetheless remains a continuing desire in the industry for continued improvement in scratch while maintaining other mechanical properties such as impact, flow and ductility. There is also need for impact modified blends with high flow characteristics because they are an attractive choice to mold large housings such as flat panel TV bezels as they offer a combination of interesting properties, including the capability to fill long flow lengths and adequate mechanical strength, and optionally flame retardancy. While many parts made from impact modified blends have good mechanical properties, parts made from these blends typically suffer from poor scratch resistance due to the presence of the impact modifier. There is a need for polycarbonate blends, particularly impact modified polycarbonate blends, that provide good scratch resistance in combination with good mechanical properties, such as ductility, and optionally, good flame performance.

### SUMMARY OF THE INVENTION

In an embodiment, a thermoplastic composition comprises in combination from 20 to 80 wt.% of a polycarbonate homopolymer or copolymer comprising repeat carbonate units having the following structure (17): 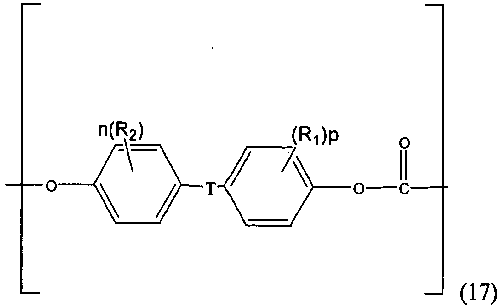 wherein R₁ and R₂ are independently at each occurrence a C₁-C₆ and T is selected from the group consisting of C₅-C₁₀ cycloalkanes attached to the aryl groups at one or two carbons, C₆-C₁₃ aryl groups, and C₇-C₁₃ aryl alkyl groups, n is an integer having a value of 0 to 4, p is an integer having a value of 1 to 4, or T is a C₁-C₅ alkyl groups, n is an integer having a value of 0, 2, 3 or 4, p is an integer having a value of 1 to 4; and from 20 to 80 wt.% of a poly(alkyl(meth)acrylate), wherein the alkyl group is straight-chain, and has 1 or 2 carbons atoms.

In another embodiment, a thermoplastic composition comprises in combination from 20 to 70 wt.% of a polycarbonate homopolymer or copolymer comprising repeat carbonate units having the following structure (17): 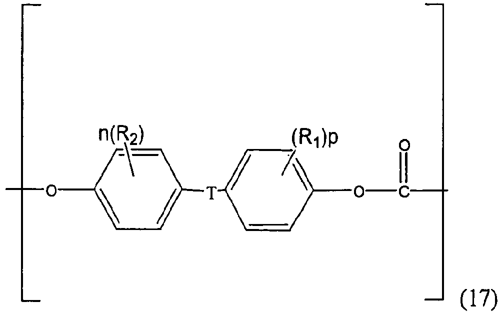 wherein R₁ and R₂ are independently at each occurrence a C₁-C₆ and T is selected from the group consisting of C₅-C₁₀ cycloalkanes attached to the aryl groups at one or two carbons, C₆-C₁₃ aryl groups, and C₇-C₁₃ aryl alkyl groups, n is an integer having a value of 0 to 4, p is an integer having a value of 1 to 4, or T is a C₁-C₅ alkyl groups, n is an integer having a value of 0, 2, 3 or 4, p is an integer having a value of 1 to 4; from 20 to 70 wt.% of a poly(alkyl(meth)acrylate), wherein the alkyl group is straight-chain, and has 1 or 2 carbons atoms; and from 10 to 30 wt.% of an impact modifier or combination of impact modifiers

In another embodiment, a thermoplastic composition comprises in combination from 20 to 70 wt.% of a polycarbonate homopolymer or copolymer comprising repeat carbonate units having the following structure: 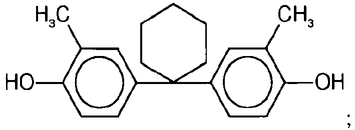 from 20 to 70 wt.% of a poly(alkyl(meth)acrylate), wherein the alkyl group is straight-chain, and has 1 or 2 carbons atoms; and from 10 to 30 wt.% of an impact modifier or combination of impact modifier.

In another embodiment, an article comprises the above thermoplastic composition.

In still another embodiment, a method of manufacture of an article comprises molding, extruding, or shaping the above thermoplastic composition.

### DETAILED DESCRIPTION OF THE INVENTION

It has been discovered by the inventors hereof that use of a poly(alkyl(meth)acrylate) in combination with a polycarbonate homopolymer or copolymer having carbonate repeat units having a specific structure provides greatly improved scratch resistance to thermoplastic compositions containing polycarbonate. The composition optionally comprises an impact modifier. The impact modifier may be an impact modifier containing rubber, a polycarbonate-polysiloxane copolymer, or a combination of both.

In an embodiment, a thermoplastic composition comprises in combination from 20 to 80 wt.% of a polycarbonate homopolymer or copolymer comprising repeat carbonate units having the following structure (17): 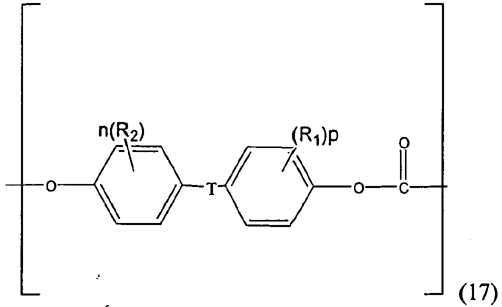 wherein R₁ and R₂ are independently at each occurrence a C₁-C₆ and T is selected from the group consisting of C₅-C₁₀ cycloalkanes attached to the aryl groups at one or two carbons, C₆-C₁₃ aryl groups, and C₇-C₁₃ aryl alkyl groups, n is an integer having a value of 0 to 4, p is an integer having a value of 1 to 4, or T is a C₁-C₅ alkyl groups, n is an integer having a value of 0, 2, 3 or 4, p is an integer having a value of 1 to 4; from 20 to 80 wt.% of a poly(alkyl(meth)acrylate), wherein the alkyl group is straight or straight-chain, and has 1 or 2 carbons atoms. In some embodiments, the polycarbonate homopolymer or copolymer comprising repeat carbonate units of formula (17) comprise a dialkyl bisphenol polycarbonate homopolymer or copolymer comprising repeat carbonate units having the following structure; 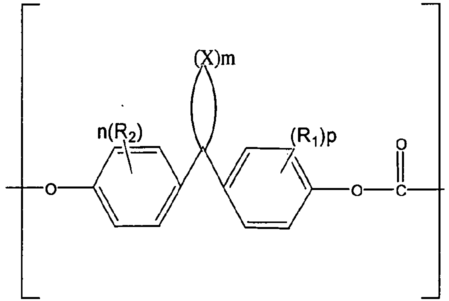 wherein R₁ and R₂ are independently selected from the group consisting of C₁-C₆ alkyl; X represents CH₂; m is an integer from 4 to 9; n is an integer from 1 to 4; and p is an integer from 1 to 4, with the proviso that at least one of R₁ or R₂ is in the 3 or 3' position. In some embodiments, the amount of carbonate units of formula (17) in the composition is at least 15 wt.%. In other embodiments, the dialkyl bisphenol polycarbonate units of the copolymer have the structure 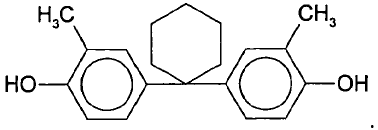 In some embodiments, the composition further comprises a polycarbonate homopolymer or copolymer different from the polycarbonate having repeat carbonate units having the structure (17).

In some embodiments, the composition further comprises an impact modifier wherein the impact modifier is ABS, MBS, ASA, polycarbonate-polysiloxane copolymer, or a combination of two or more of the foregoing impact modifiers. In some embodiments further comprises a flow promoter comprising a low molecular weight hydrocarbon resin derived from petroleum C₅ to C₉ feedstock. In some embodiments, the poly(alkyl(meth)acrylate) is PMMA. In some embodiments, the composition further comprises a flame retardant.

In another embodiment, a thermoplastic composition comprises in combination from 20 to 70 wt.% of a polycarbonate homopolymer or copolymer comprising repeat carbonate units having the following structure (17): 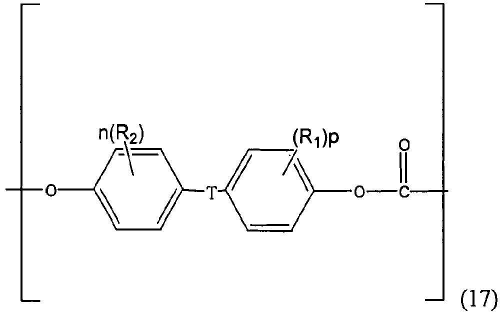 wherein R₁ and R₂ are independently at each occurrence a C₁-C₆ and T is selected from the group consisting of C₅-C₁₀ cycloalkanes attached to the aryl groups at one or two carbons, C₆-C₁₃ aryl groups, and C₇-C₁₃ aryl alkyl groups, n is an integer having a value of 0 to 4, p is an integer having a value of 1 to 4, or T is a C₁-C₅ alkyl groups, n is an integer having a value of 0, 2, 3 or 4, p is an integer having a value of 1 to 4; from 20 to 70 wt.% of a poly(alkyl(meth)acrylate), wherein the alkyl group is straight-chain, and has 1 or 2 carbons atoms; and from 10 to 30 wt.% of an impact modifier or combination of impact modifiers.

In another embodiment, a thermoplastic composition comprises in combination from 20 to 70 wt.% of a polycarbonate homopolymer or copolymer comprising repeat carbonate units having the following structure: 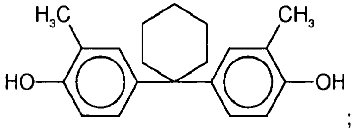 from 20 to 70 wt.% of a poly(alkyl(meth)acrylate), wherein the alkyl group is Straight-Chain, and has 1 or 2 carbons atoms; and from 10 to 30 wt.% of an impact modifier or combination of impact modifier.

In another embodiment, an article comprises the above thermoplastic composition. In some embodiments, the article has a scratch resistance of less than 17 when measured according to the ISO 1518, optionally less than 12.

As used herein, the term "polycarbonate" refers to a polymer comprising the same or different carbonate units, or a copolymer that comprises the same or different carbonate units, as well as one or more units other than carbonate (i.e. copolycarbonate); the term "aliphatic" refers to a hydrocarbon radical having a valence of at least one comprising a linear or branched array of carbon atoms which is not cyclic; "aromatic" refers to a radical having a valence of at least one comprising at least one aromatic group; "cycloaliphatic" refers to a radical having a valence of at least one comprising an array of carbon atoms which is cyclic but not aromatic; "alkyl" refers to a straight or branched chain monovalent hydrocarbon radical; "alkylene" refers to a straight or branched chain divalent hydrocarbon radical; "alkylidene" refers to a straight or branched chain divalent hydrocarbon radical, with both valences on a single common carbon atom; "alkenyl" refers to a straight or branched chain monovalent hydrocarbon radical having at least two carbons joined by a carbon-carbon double bond; "cycloalkyl" refers to a non-aromatic alicyclic monovalent hydrocarbon radical having at least three carbon atoms, with at least one degree of unsaturation; "cycloalkylene" refers to a non-aromatic alicyclic divalent hydrocarbon radical having at least three carbon atoms, with at least one degree of unsaturation; "aryl" refers to a monovalent aromatic benzene ring radical, or to an optionally substituted benzene ring system radical system fused to at least one optionally substituted benzene rings; "aromatic radical" refers to a radical having a valence of at least one comprising at least one aromatic group; examples of aromatic radicals include phenyl, pyridyl, furanyl, thienyl, naphthyl, and the like; "arylene" refers to a benzene ring diradical or to a benzene ring system diradical fused to at least one optionally substituted benzene ring; "alkylaryl" refers to an alkyl group as defined above substituted onto an aryl as defined above; "arylalkyl" refers to an aryl group as defined above substituted onto an alkyl as defined above; "alkoxy" refers to an alkyl group as defined above connected through an oxygen radical to an adjoining group; "aryloxy" refers to an aryl group as defined above connected through an oxygen radical to an adjoining group; and "direct bond", where part of a structural variable specification, refers to the direct joining of the substituents preceding and succeeding the variable taken as a "direct bond".

Compounds are described herein using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through the carbon of the carbonyl (C=O) group.

As used herein, the terms "polycarbonate" and "polycarbonate resin" means compositions having repeating structural carbonate units of formula (1): 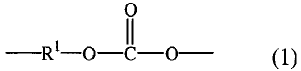 in which at least about 60 percent of the total number of R¹ groups are aromatic organic radicals and the balance thereof are aliphatic, alicyclic, or aromatic radicals. In one embodiment each R¹ is an aromatic organic radical and, more specifically, a radical of formula (2):

-A¹-Y¹-A²- (2)

wherein each of A¹ and A² is a monocyclic divalent aryl radical and Y¹ is a bridging radical having one or two atoms that separate A¹ from A², In an exemplary embodiment, one atom separates A¹ from A². Illustrative non-limiting examples of radicals of this type are -O-, -S-, -S(O)-, -S(O₂)-, -C(O)-, methylene, cyclohexylmethylene, 2-[2.2.1]-bicycloheptylidene, thylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the interfacial reaction of dihydroxy compounds having the formula HO-R¹-OH, which includes dihydroxy compounds of formula (3)

HO-A¹-Y¹-A²-OH (3)

wherein Y¹, A¹ and A² are as described above. Also included are bisphenol compounds of general formula (4): 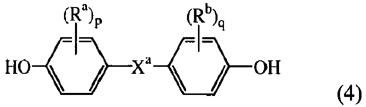 wherein R^{a} and R^{b} each represent a halogen atom or a monovalent hydrocarbon group and may be the same or different; p and q are each independently integers of 0 to 4; and X^{a} represents one of the groups of formula (5): 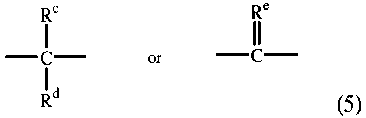 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like. Combinations comprising at least one of the foregoing dihydroxy compounds may also be used.

A nonexclusive list of specific examples of the types of bisphenol compounds that may be represented by formula (3) includes 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing bisphenol compounds may also be used.

Branched polycarbonates are also useful, as well as blends comprising a linear polycarbonate and a branched polycarbonate. The branched polycarbonates may be prepared by adding a branching agent during polymerization, for example a polyfunctional organic compound containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05 to 2.0 wt.%. All types of polycarbonate end groups are contemplated as being useful in the polycarbonate composition, provided that such end groups do not significantly affect desired properties of the thermoplastic compositions.

Suitable polycarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, and the like) or a glycol (e.g., the bishaloformate of ethylene glycol, neopentyl glycol, polyethylene glycol, and the like). Combinations comprising at least one of the foregoing types of carbonate precursors may also be used.

Among the exemplary phase transfer catalysts that may be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX wherein X is Cl⁻, Br⁻, a C₁₋₈ alkoxy group or C₆₋₁₈ aryloxy group. An effective amount of a phase transfer catalyst may be about 0.1 to about 10 wt.% based on the weight of bisphenol in the phosgenation mixture. In another embodiment an effective amount of phase transfer catalyst may be about 0.5 to about 2 wt.% based on the weight of bisphenol in the phosgenation mixture.

Alternatively, melt processes may be used. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst. Volatile monohydric phenol is removed from the molten reactants by distillation and the polymer is isolated as a molten residue.

In one specific embodiment, the polycarbonate is a linear homopolymer derived from bisphenol A, in which each of A¹ and A² is p-phenylene and Y¹ is isopropylidene. The polycarbonates may have an intrinsic viscosity, as determined in chloroform at 25°C, of about 0.3 to about 1.5 deciliters per gram (dl/gm), specifically about 0.45 to about 1.0 dl/gm. The polycarbonates may have a weight average molecular weight of about 10,000 to about 200,000, specifically about 20,000 to about 100,000 as measured by gel permeation chromatography. The polycarbonates are substantially free of impurities, residual acids, residual bases, and/or residual metals that may catalyze the hydrolysis of polycarbonate.

"Polycarbonate" and "polycarbonate resin" as used herein further includes copolymers comprising carbonate chain units together with a different type of chain unit. Such copolymers may be random copolymers, block copolymers, dendrimers and the like. One specific type of copolymer that may be used is a polyester carbonate, also known as a copolyester-polycarbonate. Such copolymers further contain, in addition to recurring carbonate chain units of the formula (1), repeating units of formula (6) 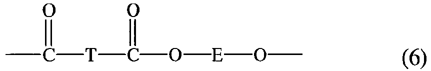 wherein E is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical.

In one embodiment, E is a C₂₋₆ alkylene radical. In another embodiment, E is derived from an aromatic dihydroxy compound of formula (7): 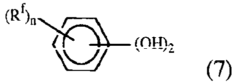 wherein each R^{f} is independently a halogen atom, a C₁₋₁₀ hydrocarbon group, or a C₁₋₁₀ halogen substituted hydrocarbon group, and n is 0 to 4. The halogen is preferably bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluororesorcinol, 2,4,5,6-tetrabromo resorcinol, and the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluorohydroquinone, 2,3,5,6-tetrabromo hydroquinone, and the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is about 10:1 to about 0.2:9.8. In another specific embodiment, E is a C₂₋₆ alkylene radical and T is p-phenylene, m-phenylene, naphthalene, a divalent cycloaliphatic radical, or a mixture thereof. This class of polyester includes the poly(alkylene terephthalates).

The copolyester-polycarbonate resins may have an intrinsic viscosity, as determined in chloroform at 25°C, of about 0.3 to about 1.5 deciliters per gram (dl/gm), specifically about 0.45 to about 1.0 dl/gm. The copolyester-polycarbonate resins may have a weight average molecular weight of about 10,000 to about 200,000, specifically about 20,000 to about 100,000 as measured by gel permeation chromatography.

The polycarbonate component may further comprise, in addition to the polycarbonates described above, combinations of the polycarbonates with other thermoplastic polymers, for example combinations of polycarbonate homopolymers and/or copolymers with polyesters and the like. As used herein, a "combination" is inclusive of all mixtures, blends, alloys, and the like. Suitable polyesters comprise repeating units of formula (6), and may be, for example, poly(alkylene dicarboxylates), liquid crystalline polyesters, and polyester copolymers. It is also possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end-use of the composition.

An example of suitable polyesters includes poly(alkylene terephthalates). Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters. Also contemplated herein are the above polyesters with a minor amount, that is, from about 0.5 to about 10 percent by weight, of units derived from an aliphatic diacid and/or an aliphatic polyol to make copolyesters.

The blends of a polycarbonate and a polyester may comprise about 10 to about 99 wt.% polycarbonate and correspondingly about 1 to about 90 wt.% polyester, in particular a poly(alkylene terephthalate). In one embodiment, the blend comprises about 30 to about 70 wt.% polycarbonate and correspondingly about 30 to about 70 wt.% polyester. The foregoing amounts are based on the combined weight of the polycarbonate and polyester.

Although blends of polycarbonates with other polymers are contemplated, in one embodiment the polycarbonate component consists essentially of polycarbonate, i.e., the polycarbonate component comprises polycarbonate homopolymers and/or polycarbonate copolymers, and no other resins that would significantly adversely impact the impact strength of the thermoplastic composition. In another embodiment, the polycarbonate component consists of polycarbonate, i.e., is composed of only polycarbonate homopolymers and/or polycarbonate copolymers.

The thermoplastic composition of the invention comprises a polycarbonate homopolymer or copolymer comprising repeat carbonate units having the following structure (17): 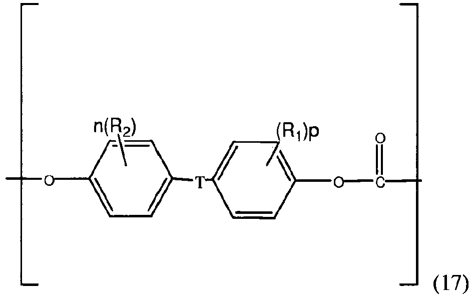 wherein R₁ and R₂ are independently at each occurrence a C₁-C₆ alkyl, n is an integer having a value of 0 to 4, p is an integer having a value of 1 to 4, and T is selected from the group consisting of C₅-C₁₀ cycloalkanes attached to the aryl groups at one or two carbons, C₁-C₅ alkyl groups, C₆-C₁₃ aryl groups, and C₇-C₁₃ aryl alkyl groups.

In one embodiment, the structure of formula (17) has the following structure (18): 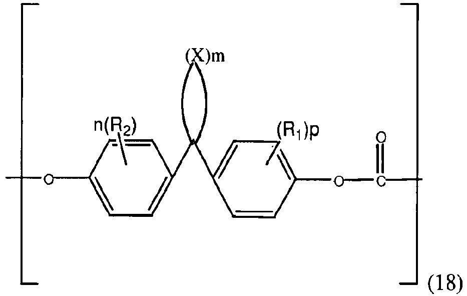 wherein R₁ and R₂ are independently selected from the group consisting of C₁-C₆ alkyl; X represents CH₂; m is an integer from 4 to 9; n is an integer from 1 to 4; and p is an integer from 1 to 4, with the proviso that at least one of R₁ or R₂ is in the 3 or 3' position. In some embodiments, R₁ and R₂ are C₁-C₃ alkyl, specifically CH₃.

In one embodiment, the dialkyl bisphenol polycarbonate comprises repeat units of DMBPC (also referred to as dimethyl bisphenol cyclohexane or 1,1-bis(4-hydroxy-3-methylphenyl)cyclohexane) homopolymer or copolymer. The homopolymer of copolymer comprises DMBFC repeat units having the structure (19):

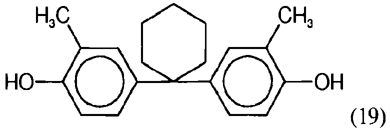

If a copolymer is desired, the DMBPC may be polymerized (or copolymerized) in polycarbonate. In an embodiment, DMBPC polycarbonate is used wherein the DMBPC polycarbonate (DMBPC-PC) comprises from 25 to 50 mol% DMBPC and from 75 to 50 mol% bisphenol A.

The method of making the DMBPC polycarbonate is not particularly limited. It may be produced by any known method of producing polycarbonate including the well-known interfacial process using phosgene and/or the melt process using a diaryl carbonate, such as diphenyl carbonate or bismethyl salicyl carbonate, as the carbonate source.

As mentioned above, it is possible to incorporate another monomer into the polymer chain to make a copolymer comprising monomer units other than those derived from structures (17), (18) or (19). Other monomers are not limited and are suitably derived from a dihydroxy composition other than that of the above structure (17), (18) or (19). Examples of other monomers include, but are not limited to, aromatic dihydroxy compounds such as bisphenols, dihydroxy benzenes such as hydroquinone, resorcinol, methylhydroquinone, butylhydroquinone, phenylhydroquinone, 4-phenylresorcinol and 4-methylresorcinol, and dihydroxy compounds comprising aliphatic diols and/or acids. As previously mentioned, diacid chloride, dicarboxylic acid or diester monomers could also be included in DMBPC homopolymers or DMBPC-PC copolymers to provide a polyestercarbonate.

In one embodiment, the amount of carbonate units of formulas (17), (18) or (19) is at least 15 wt.%, specifically from 15 to 90 wt.%, based on the total weight of the composition. In other embodiments, the amount of carbonate units of formulas (17), (18) or (19) is from 15 to 70 wt.%, or from 15 to 50 wt.%, based on the total weight of the composition.

The thermoplastic composition further includes a poly(alkyl (meth)acrylate), wherein the alkyl group is straight or branched-chain, and has 1 or 2 carbons atoms. As used herein, "(meth)acrylate" is inclusive of both acrylates and methacrylates. In one embodiment the poly(alkyl (meth)acrylate) is poly(methyl methacrylate) (PMMA). PMMA may be produced by the polymerization of methyl methacrylate monomer, and may be derived by (1) the reaction of acetone cyanohydrin, methanol, and sulphuric acid or (2) the oxidation of tert-butyl alcohol to methacrolein and then to methacrylic acid followed by the esterification reaction with methanol. As is known, PMMA homopolymer is difficult to obtain, and therefore is available commercially and used herein as a mixture of the homopolymer and various copolymers of methyl methacrylate and C₁-C₄ alkyl acrylates, such as ethyl acrylate. "PMMA" as used herein therefore includes such mixtures, which are commercially available from, for example, Atofina under the trade designations V825, V826, V920, V045, and VM, and from Lucite under the trade names CLG340, CLG356, CLG960, CLG902, CMG302.

The thermoplastic composition optionally includes an impact modifier in addition to the poly(alkyl (meth)acrylate, such as bulk polymerized ABS. The bulk polymerized ABS comprises an elastomeric phase comprising (i) butadiene and having a Tg of less than about 10°C, and (ii) a rigid polymeric phase having a Tg of greater than about 15°C and comprising a copolymer of a monovinylaromatic monomer such as styrene and an unsaturated nitrile such as acrylonitrile. Such ABS polymers may be prepared by first providing the elastomeric polymer, then polymerizing the constituent monomers of the rigid phase in the presence of the elastomer to obtain the graft copolymer. The grafts may be attached as graft branches or as shells to an elastomer core. The shell may merely physically encapsulate the core, or the shell may be partially or essentially completely grafted to the core.

Polybutadiene homopolymer may be used as the elastomer phase. Alternatively, the elastomer phase of the bulk polymerized ABS comprises butadiene copolymerized with up to about 25 wt.% of another conjugated diene monomer of formula (8): 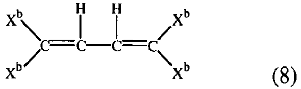 wherein each X^{b} is independently C₁-C₅ alkyl. Examples of conjugated diene monomers that may be used are isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as mixtures comprising at least one of the foregoing conjugated diene monomers. A specific conjugated diene is isoprene.

The elastomeric butadiene phase may additionally be copolymerized with up to 25 wt.%, specifically up to about 15 wt.%, of another comonomer, for example monovinylaromatic monomers containing condensed aromatic ring structures such as vinyl naphthalene, vinyl anthracene and the like, or monomers of formula (9): 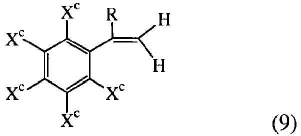 wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkaryl, C₁-C₁₂ alkoxy, C₃-C₁₂ cycloalkoxy, C₆-C₁₂ aryloxy, chloro, bromo, or hydroxy, and R is hydrogen, C₁-C₅ alkyl, bromo, or chloro. Examples of suitable monovinylaromatic monomers copolymerizable with the butadiene include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing monovinylaromatic monomers. In one embodiment, the butadiene is copolymerized with up to about 12 wt.%, specifically about 1 to about 10 wt.% styrene and/or alpha-methyl styrene.

Other monomers that may be copolymerized with the butadiene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (10): 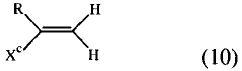 wherein R is hydrogen, C₁-C₅ alkyl, bromo, or chloro, and X^{c} is cyano, C₁-C₁₂ alkoxycarbonyl, C₁-C₁₂ aryloxycarbonyl, hydroxy carbonyl, and the like. Examples of monomers of formula (10) include acrylonitrile, ethacrylonitrile, methacrylonitrile, alpha-chloroacrylonitrile, bela-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the butadiene.

The particle size of the butadiene phase is not critical, and may be, for example about 0.01 to about 20 micrometers, specifically about 0.5 to about 10 micrometers, more specifically about 0.6 to about 1.5 micrometers may be used for bulk polymerized rubber substrates. Particle size may be measured by light transmission methods or capillary hydrodynamic chromatography (CHDF). The butadiene phase may provide about 5 to about 95 wt.% of the total weight of the ABS impact modifier copolymer, more specifically about 20 to about 90 wt.%, and even more specifically about 40 to about 85 wt.% of the ABS impact modifier, the remainder being the rigid graft phase.

The rigid graft phase comprises a copolymer formed from a styrenic monomer composition together with an unsaturated monomer comprising a nitrile group. As used herein, "styrenic monomer" includes monomers of formula (9) wherein each X^{c} is independently hydrogen, C₁-C₄ alkyl, phenyl, C₇-C₉ aralkyl, C₇-C₉ alkaryl, C₁-C₄ alkoxy, phenoxy, chloro, bromo, or hydroxy, and R is hydrogen, C₁-C₂ alkyl, bromo, or chloro. Specific examples styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like. Combinations comprising at least one of the foregoing styrenic monomers may be used.

Further as used herein, an unsaturated monomer comprising a nitrile group includes monomers of formula (10) wherein R is hydrogen, C₁-C₅ alkyl, bromo, or chloro, and X^{c} is cyano. Specific examples include acrylonitrile, ethacrylonitrile, methacrylonitrile, alpha-chloroacrylonitrile, beta-chloroacrylonitrile, alpha-bromoacrylonitrile, and the like. Combinations comprising at least one of the foregoing monomers may be used.

The rigid graft phase of the bulk polymerized ABS may further optionally comprise other monomers copolymerizable therewith, including other monovinylaromatic monomers and/or monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (10). Specific comonomers include C₁-C₄ alkyl (meth)acrylates, for example methyl methacrylate.

The rigid copolymer phase will generally comprise about 10 to about 99 wt.%, specifically about 40 to about 95 wt.%, more specifically about 50 to about 90 wt.% of the styrenic monomer; about 1 to about 90 wt.%, specifically about 10 to about 80 wt.%, more specifically about 10 to about 50 wt.% of the unsaturated monomer comprising a nitrile group; and 0 to about 25 wt.%, specifically 1 to about 15 wt.% of other comonomer, each based on the total weight of the rigid copolymer phase.

The bulk polymerized ABS copolymer may further comprise a separate matrix or continuous phase of ungrafted rigid copolymer that may be simultaneously obtained with the ABS. The ABS may comprise about 40 to about 95 wt.% elastomer-modified graft copolymer and about 5 to about 65 wt.% rigid copolymer, based on the total weight of the ABS. In another embodiment, the ABS may comprise about 50 to about 85 wt.%, more specifically about 75 to about 85 wt.% elastomer-modified graft copolymer, together with about 15 to about 50 wt.%, more specifically about 15 to about 25 wt.% rigid copolymer, based on the total weight of the ABS.

A variety of bulk polymerization methods for ABS-type resins are known. In multizone plug flow bulk processes, a series of polymerization vessels (or towers), consecutively connected to each other, providing multiple reaction zones. The elastomeric butadiene may be dissolved in one or more of the monomers used to form the rigid phase, and the elastomer solution is fed into the reaction system. During the reaction, which may be thermally or chemically initiated, the elastomer is grafted with the rigid copolymer (i.e., SAN). Bulk copolymer (referred to also as free copolymer, matrix copolymer, or non-grafted copolymer) is also formed within the continuous phase containing the dissolved rubber. As polymerization continues, domains of free copolymer are formed within the continuous phase of rubber/comonomers to provide a two-phase system. As polymerization proceeds, and more free copolymer is formed, the elastomer-modified copolymer starts to disperse itself as particles in the free copolymer and the free copolymer becomes a continuous phase (phase inversion). Some free copolymer is generally occluded within the elastomer-modified copolymer phase as well. Following the phase inversion, additional heating may be used to complete polymerization. Numerous modifications of this basis process have been described, for example in U.S. Patent No. 3,511,895, which describes a continuous bulk ABS process that provides controllable molecular weight distribution and microgel particle size using a three-stage reactor system. In the first reactor, the elastomer/monomer solution is charged into the reaction mixture under high agitation to precipitate discrete rubber particle uniformly throughout the reactor mass before appreciable cross-linking can occur. Solids levels of the first, the second, and the third reactor are carefully controlled so that molecular weights fall into a desirable range. U.S. Patent No. 3,981,944 discloses extraction of the elastomer particles using the styrenic monomer to dissolve/disperse the elastomer particles, prior to addition of the unsaturated monomer comprising a nitrile group and any other comonomers. U.S. Patent No. 5,414,045 discloses reacting in a plug flow grafting reactor a liquid feed composition comprising a styrenic monomer composition, an unsaturated nitrile monomer composition, and an elastomeric butadiene polymer to a point prior to phase inversion, and reacting the first polymerization product (grafted elastomer) therefrom in a continuous-stirred tank reactor to yield a phase inverted second polymerization product that then can be further reacted in a finishing reactor, and then devolatilized to produce the desired final product.

Additional impact modifiers include elastomer-modified graft copolymers comprising (i) an elastomeric (i.e., rubbery) polymer substrate having a Tg less than about 10°C, more specifically less than about -10°C, or more specifically about -40° to -80°C, and (ii) a rigid polymeric superstrate grafted to the elastomeric polymer substrate, The grafts may be attached as graft branches or as shells to an elastomer core. The shell may merely physically encapsulate the core, or the shell may be partially or essentially completely grafted to the core.

Suitable materials for use as the elastomer phase include, for example, conjugated diene rubbers; copolymers of a conjugated diene with less than about 50 wt.% of a copolymerizable monomer; olefin rubbers such as ethylene propylene copolymers (EPR) or ethylene-propylene-diene monomer rubbers (EPDM); ethylene-vinyl acetate rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers. In one embodiment, the elastomer phase of the impact modifier is diene or butadiene based.

Suitable conjugated diene monomers for preparing the elastomer phase are of formula (8) above wherein each X^{b} is independently hydrogen, C₁-C₅ alkyl, and the like. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3-and 2,4-hexadienes, and the like, as well as mixtures comprising at least one of the foregoing conjugated diene monomers. Specific conjugated diene homopolymers include polybutadiene and polyisoprene.

Copolymers of a conjugated diene rubber may also be used, for example those produced by aqueous radical emulsion polymerization of a conjugated diene and one or more monomers copolymerizable therewith. Monomers that are suitable for copolymerization with the conjugated diene include monovinylaromatic monomers containing condensed aromatic ring structures, such as vinyl naphthalene, vinyl anthracene and the like, or monomers of formula (9) above, wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkaryl, C₁-C₁₂ alkoxy, C₃-C₁₂ cycloalkoxy, C₆-C₁₂ aryloxy, chloro, bromo, or hydroxy, and R is hydrogen, C₁-C₅ alkyl, bromo, or chloro. Examples of suitable monovinylaromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, combinations comprising at least one of the foregoing compounds, and the like. Styrene and/or alpha-methylstyrene are commonly used as monomers copolymerizable with the conjugated diene monomer.

Other monomers that may be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (10) wherein R is hydrogen, C₁-C₅ alkyl, bromo, or chloro, and X^{c} is cyano, C₁-C₁₂ alkoxycarbonyl, C₁-C₁₂ aryloxycarbonyl, hydroxy carbonyl, and the like. Examples of monomers of formula (10) include acrylonitrile, ethacrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Mixtures of the foregoing monovinyl monomers and monovinylaromatic monomers may also be used.

Certain (meth)acrylate monomers may also be used to provide the elastomer phase, including cross-linked, particulate emulsion homopolymers or copolymers of C₁₋₁₆ alkyl (meth)acrylates, specifically C₁₋₉ alkyl (meth)acrylates, in particular C₄₋₆ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers, The C₁₋₁₆ alkyl (meth)acrylate monomers may optionally be polymerized in admixture with up to 15 wt.% of comonomers of generic formulas (8), (9), or (10) as broadly described above. Exemplary comonomers include but are not limited to butadiene, isoprene, styrene, methyl methacrylate, phenyl methacrylate, phenethylmethacrylate, N-cyclohexylacrylamide, vinyl methyl ether or acrylonitrile, and mixtures comprising at least one of the foregoing comonomers. Optionally, up to 5 wt.% a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase may be polymerized by mass, emulsion, suspension, solution or combined processes such as bulk-suspension, emulsion-bulk, bulk-solution or other techniques, using continuous, semibatch, or batch processes. The particle size of the elastomer substrate is not critical. For example, an average particle size of about 0.001 to about 25 micrometers, specifically about 0.01 to about 15 micrometers, or even more specifically about 0.1 to about 8 micrometers may be used for emulsion based polymerized rubber lattices. A particle size of about 0.5 to about 10 micrometers, specifically about 0.6 to about 1.5 micrometers may be used for bulk polymerized rubber substrates. The elastomer phase may be a particulate, moderately cross-linked copolymer derived from conjugated butadiene or C₄₋₉ alkyl acrylate rubber, and preferably has a gel content greater than 70%. Also suitable are copolymers derived from mixtures of butadiene with styrene, acrylonitrile, and/or C₄₋₆ alkyl acrylate rubbers.

The elastomeric phase may provide about 5 to about 95 wt.% of the elastomer-modified graft copolymer, more specifically about 20 to about 90 wt.%, and even more specifically about 40 to about 85 wt.%, the remainder being the rigid graft phase.

The rigid phase of the elastomer-modified graft copolymer may be formed by graft polymerization of a mixture comprising a monovinylaromatic monomer and optionally one or more comonomers in the presence of one or more elastomeric polymer substrates. The above broadly described monovinylaromatic monomers of formula (9) may be used in the rigid graft phase, including styrene, alpha-methyl styrene, halostyrenes such as dibromostyrene, vinyltoluene, vinylxylene, butylstyrene, para-hydroxystyrene, methoxystyrene, and others, or combinations comprising at least one of the foregoing monovinylaromatic monomers. Suitable comonomers include, for example, the above broadly described monovinylic monomers and/or monomers of the general formula (10). In one embodiment, R is hydrogen or C₁-C₂ alkyl, and X^{c} is cyano or C₁-C₁₂ alkoxycarbonyl. Specific examples of suitable comonomers for use in the rigid phase include acrylonitrile, ethacrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

In one specific embodiment, the rigid graft phase is formed from styrene or alpha-methyl styrene copolymerized with ethyl acrylate and/or methyl methacrylate. In other specific embodiments, the rigid graft phase is formed from styrene copolymerized with methyl methacrylate; and styrene copolymerized with methyl methacrylate and acrylonitrile.

The relative ratio of monovinylaromatic monomer and comonomer in the rigid graft phase may vary widely depending on the type of elastomer substrate, type of monovinylaromatic monomer(s), type of comonomer(s), and the desired properties of the impact modifier. The rigid phase may generally comprise up to 100 wt.% of monovinyl aromatic monomer, specifically about 30 to about 100 wt.%, more specifically about 50 to about 90 wt.% monovinylaromatic monomer, with the balance being comonomer(s).

Depending on the amount of elastomer-modified polymer present, a separate matrix or continuous phase of ungrafted rigid polymer or copolymer may be simultaneously obtained along with the additional elastomer-modified graft copolymer. Typically, such impact modifiers comprise about 40 to about 95 wt.% elastomer-modified graft copolymer and about 5 to about 65 wt.% rigid (co)polymer, based on the total weight of the impact modifier. In another embodiment, such impact modifiers comprise about 50 to about 85 wt.%, more specifically about 75 to about 85 wt.% rubber-modified rigid copolymer, together with about 15 to about 50 wt.%, more specifically about 15 to about 25 wt.% rigid (co)polymer, based on the total weight of the impact modifier.

Specific examples of elastomer-modified graft copolymers include but are not limited to, methyl methacrylate-acrylonitrile-butadiene-styrene (MABS), methyl methacrylate-butadiene-styrene (MBS), and acrylonitrile-ethylene-propylene-diene-styrene (AES).

If desired, the optional additional impact modifier may be prepared by an emulsion polymerization process that is free of basic species, for example species such as alkali metal salts of C₆₋₃₀ fatty acids, for example sodium stearate, lithium stearate, sodium oleate, potassium oleate, and others, alkali metal carbonates, amines such as dodecyl dimethyl amine, dodecyl amine, and others, and ammonium salts of amines, if desired, but it is not a requirement. Such materials are commonly used as polymerization aids, that is, surfactants in emulsion polymerization, and may catalyze transesterification and/or degradation of polycarbonates. Instead, ionic sulfate, sulfonate or phosphate surfactants may be used in preparing the impact modifiers, particularly the elastomeric substrate portion of the impact modifiers, if desired. Suitable surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, and combinations comprising at least one of the foregoing surfactants. A specific surfactant is a C₆₋₁₆, specifically a C₈₋₁₂ alkyl sulfonate. This emulsion polymerization process is described and disclosed in various patents and literature of such companies as Rohm & Haas and General Electric Company.

Another specific type of elastomer-modified impact modifier comprises structural units derived from at least one silicone rubber monomer, a branched acrylate rubber monomer having the formula H₂C=C(R^{d})C(O)OCH₂CH₂R^{e}, wherein R^{d} is hydrogen or a C₁-C₉ linear or branched hydrocarbyl group and R^{e} is a branched C₃-C₁₆ hydrocarbyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, for example, decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane., octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and others known in the art, alone or in combination, The polymerizable alkenyl-containing organic material may be, for example, a monomer of formula (9) or (10), for example, styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, and others known in the art, alone or in combination.

The at least one first graft link monomer may be an (acryloxy)alkoxysilane, a (mercaptoalkyl)alkoxysilane, a vinylalkoxysilane, or an allylalkoxysilane, alone or in combination, for example, (gamma-methacryloxypropyl)(dimethoxy)methylsilane and/or (3-mercaptopropyl)trimethoxysilane. The at least one second graft link monomer is a polyethylenically unsaturated compound having at least one allyl group, such as allyl methacrylate, triallyl cyanurate, or triallyl isocyanurate, alone or in combination.

The silicone-acrylate impact modifier compositions can be prepared by emulsion polymerization, wherein, for example at least one silicone rubber monomer is reacted with at least one first graft link monomer at a temperature from about 30°C to about 110°C to form a silicone rubber latex, in the presence of a surfactant such as dodecylbenzenesulfonic acid. Alternatively, a cyclic siloxane such as cyclooctamethyltetrasiloxane and an tetraethoxyorthosilicate may be reacted with a first graft link monomer such as (gamma-methacryloxypropyl)methyldimethoxysilane, to afford silicone rubber having an average particle size from about 100 nanometers to about 2 microns. At least one branched acrylate rubber monomer is then polymerized with the silicone rubber particles, optionally in presence of a cross linking monomer, such as allylmethacrylate in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with a coagulant) and dried to a fine powder to produce the silicone-acrylate rubber impact modifier composition. This method can be generally used for producing the silicone-acrylate impact modifier having a particle size from about 100 nanometers to about two micrometers.

The composition optionally comprises a polycarbonate-polysiloxane copolymer comprising polycarbonate blocks and polydiorganosiloxane blocks. The polycarbonate blocks in the copolymer comprise repeating structural units of formula (1) as described above, for example wherein R¹ is of formula (2) as described above. These units may be derived from reaction of dihydroxy compounds of formula (3) as described above. In one embodiment, the dihydroxy compound is bisphenol A, in which each of A¹ and A² is p-phenylene and Y¹ is isopropylidene,

The polydiorganosiloxane blocks comprise repeating structural units of formula (11) (sometimes referred to herein as 'siloxane'): 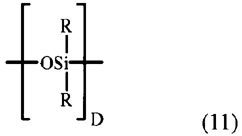 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups may be used in the same copolymer.

The value of D in formula (11) may vary widely depending on the type and relative amount of each component in the thermoplastic composition, the desired properties of the composition, and like considerations. Generally, D may have an average value of 2 to about 1000, specifically about 2 to about 500, more specifically about 5 to about 100. In one embodiment, D has an average value of about 10 to about 75, and in still another embodiment, D has an average value of about 40 to about 60. Where D is of a lower value, for example, less than about 40, it may be desirable to use a relatively larger amount of the polycarbonate-polysiloxane copolymer. Conversely, where D is of a higher value, for example, greater than about 40, it may be necessary to use a relatively lower amount of the polycarbonate-polysiloxane copolymer.

A combination of a first and a second (or more) polycarbonate-polysiloxane copolymers may be used, wherein the average value of D of the first copolymer is less than the average value of D of the second copolymer.

In one embodiment, the polydiorganosiloxane blocks are provided by repeating structural units of formula (12): 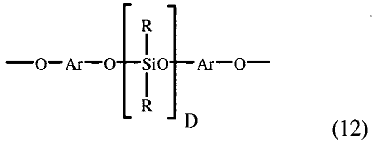 wherein D is as defined above; each R may be the same or different, and is as defined above; and Ar may be the same or different, and is a substituted or unsubstituted C₆-C₃₀ arylene radical, wherein the bonds are directly connected to an aromatic moiety. Suitable Ar groups in formula (12) may be derived from a C₆-C₃₀ dihydroxyarylene compound, for example a dihydroxyarylene compound of formula (3), (4), or (7) above. Combinations comprising at least one of the foregoing dihydroxyarylene compounds may also be used. Specific examples of suitable dihydroxyarlyene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds may also be used.

Such units may be derived from the corresponding dihydroxy compound of the following formula: 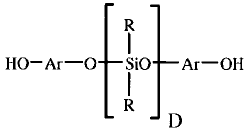 wherein Ar and D are as described above. Such compounds are further described in U.S. Patent No. 4,746,701 to Kress et al. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (13) 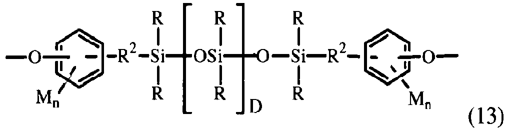 wherein R and D are as defined above. R² in formula (13) is a divalent C₂-C₈ aliphatic group. Each M in formula (13) may be the same or different, and may be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, R² is a divalent C₁-C₃ aliphatic group, and R is methyl.

These units may be derived from the corresponding dihydroxy polydiorganosiloxane (14): 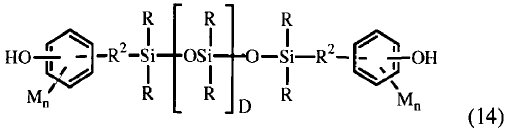 wherein R, D, M, R², and n are as described above.

Such dihydroxy polysiloxanes can be made by effecting a platinum catalyzed addition between a siioxane hydride of the formula (15), 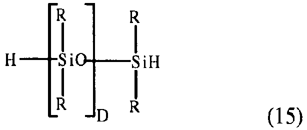 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol, Mixtures comprising at least one of the foregoing may also be used.

The polycarbonate-polysiloxane copolymer may be manufactured by reaction of diphenolic polysiloxane (14) with a carbonate source and a dihydroxy aromatic compound of formula (3), optionally in the presence of a phase transfer catalyst as described above. Suitable conditions are similar to those useful in forming polycarbonates. For example, the copolymers are prepared by phosgenation, at temperatures from below 0°C to about 100°C, specifically about 25°C to about 50°C, Since the reaction is exothermic, the rate of phosgene addition may be used to control the reaction temperature. The amount of phosgene required will generally depend upon the amount of the dihydric reactants. Alternatively, the polycarbonate-polysiloxane copolymers may be prepared by co-reacting in a molten state, the dihydroxy monomers and a diaryl carbonate ester, such as diphenyl carbonate, in the presence of a transesterification catalyst as described above.

In the production of the polycarbonate-polysiloxane copolymer, the amount of dihydroxy polydiorganosiloxane is selected so as to provide the desired amount of polydiorganosiloxane units in the copolymer. The amount of polydiorganosiloxane units may vary widely, for example, may be about 1 wt.% to about 99 wt.% of polydimethylsiloxane, or an equivalent molar amount of another polydiorganosiloxane, with the balance being carbonate units. The particular amounts used will therefore be determined depending on desired physical properties of the thermoplastic composition, the value of D (within the range of 2 to about 1000), and the type and relative amount of each component in the thermoplastic composition, including the type and amount of polycarbonate, type and amount of impact modifier, type and amount of polycarbonate-polysiloxane copolymer, and type and amount of any other additives. Suitable amounts of dihydroxy polydiorganosiloxane can be determined by one of ordinary skill in the art without undue experimentation using the guidelines taught herein. For example, the amount of dihydroxy polydiorganosiloxane may be selected so as to produce a copolymer comprising about 1 wt.% to about 75 wt.%, or about 1 wt.% to about 50 wt.% polydimethylsiloxane, or an equivalent molar amount of another polydiorganosiloxane. In one embodiment, the copolymer comprises about 5 wt.% to about 40 wt.%, optionally about 5 wt.% to about 25 wt.% polydimethylsiloxane, or an equivalent molar amount of another polydiorganosiloxane, with the balance being polycarbonate. In a particular embodiment, the copolymer may comprise about 20 wt.% siloxane.

The polycarbonate-polysiloxane copolymers have a weight-average molecular weight (MW, measured, for example, by gel permeation chromatography, ultra-centrifugation, or light scattering) of about 10,000 g/mol to about 200,000 g/mol, specifically about 20,000 g/mol to about 100,000 g/mol.

The composition may further comprise an ungrafted rigid copolymer in addition to the poly(alkyl(meth)acrylate). The rigid copolymer is additional to any rigid copolymer present in the impact modifier. It may be the same as any of the rigid copolymers described above, without the elastomer modification. The rigid copolymers generally have a Tg greater than about 15°C, specifically greater than about 20°C, and include, for example, polymers derived from monovinylaromatic monomers containing condensed aromatic ring structures, such as vinyl naphthalene, vinyl anthracene and the like, or monomers of formula (9) as broadly described above, for example styrene and alpha-methyl styrene; monovinylic monomers such as itaconic acid, acrylamide, N-substituted acrylamide or methacrylamide, maleic anhydride, maleimide, N-alkyl, aryl or haloaryl substituted maleimide, glycidyl (meth)acrylates, and monomers of the general formula (10) as broadly described above, for example acrylonitrile, methyl acrylate and methyl methacrylate; and copolymers of the foregoing, for example styrene-acrylonitrile (SAN), styrene-alpha-methyl styrene-acrylonitrile, methyl methacrylate-acrylonitrile-styrene, and methyl methacrylate-styrene.

The rigid copolymer may comprise about 1 to about 99 wt.%, specifically about 20 to about 95 wt.%, more specifically about 40 to about 90 wt.% of vinylaromatic monomer, together with 1 to about 99 wt.%, specifically about 5 to about 80 wt.%, more specifically about 10 to about 60 wt.% of copolymerizable monovinylic monomers. In one embodiment the rigid copolymer is SAN, which may comprise about 50 to about 99 wt.% styrene, with the balance acrylonitrile, specifically about 60 to about 90 wt.% styrene, and more specifically about 65 to about 85 wt.% styrene, with the remainder acrylonitrile.

The rigid copolymer may be manufactured by bulk, suspension, or emulsion polymerization, and is substantially free of impurities, residual acids, residual bases or residual metals that may catalyze the hydrolysis of polycarbonate. In one embodiment, the rigid copolymer is manufactured by bulk polymerization using a boiling reactor. The rigid copolymer may have a weight average molecular weight of about 50,000 to about 300,000 as measured by GPC using polystyrene standards. In one embodiment, the weight average molecular weight of the rigid copolymer is about 70,000 to about 190,000.

The thermoplastic composition optionally comprises a flow promoter to improve flow and other properties, such as a low molecular weight hydrocarbon resin. Particularly useful classes of low molecular weight hydrocarbon resins are those derived from petroleum C₅ to C₉ feedstock that are derived from unsaturated C₅ to C₉ monomers obtained from petroleum cracking. Non-limiting examples include olefins, e.g. pentenes, hexenes, heptenes and the like; diolefins, e.g. pentadienes, hexadienes and the like; cyclic olefins and diolefins, e.g. cyclopentene, cyclopentadiene, cyclohexene, cyclohexadiene, methyl cyclopentadiene and the like; cyclic diolefin dienes, e.g., dicyclopentadiene, methylcyclopentadiene dimer and the like; and aromatic hydrocarbons, e.g. vinyltoluenes, indenes, methylindenes and the like. The resins can additionally be partially or fully hydrogenated.

Examples of commercially suitable low molecular weight hydrocarbon resins derived from petroleum C₅ to C₉ feedstock include the following: hydrocarbon resins available from Eastman Chemical under the trademark Piccotac®, the aromatic hydrocarbon resins available from Eastman Chemical under the trademark Picco®, the fully hydrogenated alicyclic hydrocarbon resin based on C₉ monomers available from Arakawa Chemical Inc. under the trademark Arkon® and sold, depending on softening point, as Arkon® P140, P125, P115, P100, P90, P70 or the partially hydrogenated hydrocarbon resins sold as Arkon® M135, M115, M100 and M90, the fully or partially hydrogenated hydrocarbon resin available from Eastman Chemical under the tradename Regalite® and sold, depending on softening point, as Regalite® R1100, S1100, R1125, R1090 and R1010, or the partially hydrogenated resins sold as Regalite® R7100, R9100, S5100 and S7125, the hydrocarbon resins available from Exxon Chemical under the trade Escorez®, sold as the Escorez® 1000, 2000 and 5000 series, based on C₅, C₉ feedstock and mixes thereof, or the hydrocarbon resins sold as the Escorez® 5300, 5400 and 5600 series based on cyclic and C₉ monomers, optionally hydrogenated and the pure aromatic monomer hydrocarbon resins such as for instance the styrene , α-methyl styrene based hydrocarbon resins available from Eastman Chemical under the tradename Kristalex®. Low molecular weight hydrocarbon resins are generally used in amounts of about 0.1 to about 10 parts by weight, based on 100 parts by weight of the total composition.

In addition to the foregoing components previously described, the polycarbonate compositions optionally further comprise a flame retardant if desired, for example an organic phosphates and/or an organic compound containing phosphorus-nitrogen bonds.

One type of exemplary organic phosphate is an aromatic phosphate of the formula (GO)₃P=O, wherein each G is independently an alkyl, cycloalkyl, aryl, alkaryl, or aralkyl group, provided that at least one G is an aromatic group. Two of the G groups may be joined together to provide a cyclic group, for example, diphenyl pentaerythritol diphosphate, which is described by Axelrod in U.S. Pat. No. 4,154,775. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 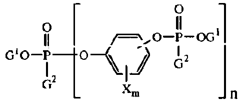 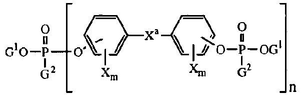 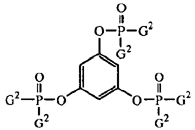 wherein each G¹ is independently a hydrocarbon having 1 to about 30 carbon atoms; each G² is independently a hydrocarbon or hydrocarbonoxy having 1 to about 30 carbon atoms; each X is independently a bromine or chlorine; m 0 to 4, and n is 1 to about 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A (BPADP), respectively, their oligomeric and polymeric counterparts, and the like. Methods for the preparation of the aforementioned di- or polyfunctional aromatic compounds are described in British Patent No. 2,043,083.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. The organic phosphorus-containing flame retardants are generally present in amounts of about 0.5 to about 20 parts by weight, based on 100 parts by weight of the total composition, exclusive of any filler.

The thermoplastic composition may be essentially free of chlorine and bromine, particularly chlorine and bromine flame retardants. "Essentially free of chlorine and bromine" as used herein refers to materials produced without the intentional addition of chlorine, bromine, and/or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine may be defined as having a bromine and/or chlorine content of less than or equal to about 100 parts per million by weight (ppm), less than or equal to about 75 ppm, or less than or equal to about 50 ppm. When this definition is applied to the fire retardant it is based on the total weight of the fire retardant. When this definition is applied to the thermoplastic composition it is based on the total weight of polycarbonate, impact modifier and fire retardant.

Exemplary suitable flame retardant compounds containing phosphorus-nitrogen bonds include phosphonitrilic chloride and tris(aziridinyl) phosphine oxide. When present, phosphorus-containing flame retardants are generally present in amounts of about 1 to about 20 parts by weight, based on 100 parts by weight of polycarbonate component and the impact modifier composition.

Halogenated materials may also be used as flame retardants, for example halogenated compounds and resins of the formula (16): 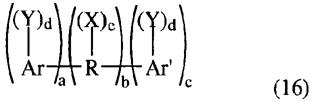 wherein R is an alkylene, alkylidene or cycloaliphatic linkage, e.g., methylene, propylene, isopropylidene, cyclohexylene, cyclopentylidene, and the like; an oxygen ether, carbonyl, amine, or a sulfur containing linkage, e.g., sulfide, sulfoxide, sulfone, and the like; or two or more alkylene or alkylidene linkages connected by such groups as aromatic, amino, ether, carbonyl, sulfide, sulfoxide, sulfone, and the like groups; Ar and Ar' are each independently a mono- or polycarbocyclic aromatic group such as phenylene, biphenylene, terphenylene, naphthylene, and the like, wherein hydroxyl and Y substituents on Ar and Ar' can be varied in the ortho, meta or para positions on the aromatic rings and the groups can be in any possible geometric relationship with respect to one another; each Y is independently an organic, inorganic or organometallic radical, for example (1) a halogen such as chlorine, bromine, iodine, or fluorine, (2) an ether group of the general formula -OE, wherein E is a monovalent hydrocarbon radical similar to X, (3) monovalent hydrocarbon groups of the type represented by R or (4) other substituents, e.g., nitro, cyano, and the like, the substituents being essentially inert provided there be at least one and preferably two halogen atoms per aryl nucleus; each X is independently a monovalent C₁₋₁₈ hydrocarbon group such as methyl, propyl, isopropyl, , decyl, phenyl, naphthyl, biphenyl, xylyl, tolyl, benzyl, ethylphenyl, cyclopentyl, cyclohexyl, and the like, each optionally containing inert substituents; each d is independently 1 to a maximum equivalent to the number of replaceable hydrogens substituted on the aromatic rings comprising Ar or Ar'; each e is independently 0 to a maximum equivalent to the number of replaceable hydrogens on R; and each a, b, and c is independently a whole number, including 0, with the proviso that when b is 0, either a or c, but not both, may be 0, and when b is not 0, neither a nor c may be 0.

Included within the scope of the above formula are bisphenols of which the following are representative: bis(2,6-dibromophenyl)methane; 1,1-bis-(4-iodophenyl)ethane; 2,6-bis(4,6-dichloronaphthyl)propane; 2,2-bis(2,6-dichlorophenyl)pentane; bis(4-hydroxy-2,6-dichloro-3-methoxyphenyl)methane; and 2,2-bis(3-bromo-4-hydroxyphenyl)propane. Also included within the above structural formula are 1,3-dichlorobenzene, 1,4-dibrombenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like. Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants are generally used in amounts of about 1 to about 50 parts by weight, based on 100 parts by weight of the total composition.

Inorganic flame retardants may also be used, for example salts of C₁₋₁₆ alkyl sulfonates such as potassium perfluorobutane sulfonate (Rimar salt), potassium perfluorooctane sulfonate, tetraethylammonium perfluorohexane sulfonate, and potassium diphenylsulfone sulfonate; salts such as CaCO₃, BaCO₃, and BaCO₃; salts of fluoro-anion complex such as Li₃AlF₆, BaSiF₆, KBF₄, K₃AlF₆, KAlF₄, K₂SiF₆, and Na₃AlF₆; and the like. When present, inorganic flame retardant salts are generally present in amounts of about 0.01 to about 25 parts by weight, more specifically about 0.1 to about 10 parts by weight, based on 100 parts by weight of the total composition.

The relative amount of each component of the thermoplastic composition will depend on the particular type of polycarbonate(s) and the amounts used, the presence of any other resins, the amount of poly(alkyl(meth)acrylate) and any impact modifiers or other rigid graft copolymer, as well as the desired properties of the composition. Particular amounts may be readily selected by one of ordinary skill in the art using the guidance provided herein.

In addition, the thermoplastic composition may include various additives such as fillers, reinforcing agents, stabilizers, and the like, with the proviso that the additives do not adversely affect the desired properties of the thermoplastic compositions. Mixtures of additives may be used. Such additives may be mixed at a suitable time during the mixing of the components for forming the composition

Suitable fillers or reinforcing agents that may be used include, for example, silicates and silica powders such as aluminum silicate (mullite), synthetic calcium silicate, zirconium silicate, fused silica, crystalline silica graphite, natural silica sand, and the like; boron powders such as boron-nitride powder, boron-silicate powders, and the like; oxides such as TiO₂, aluminum oxide, magnesium oxide, and the like; calcium sulfate (as its anhydride, dihydrate or trihydrate); calcium carbonates such as chalk, limestone, marble, synthetic precipitated calcium carbonates, and the like; talc, including fibrous, modular, needle shaped, lamellar talc, and the like; wollastonite; surface-treated wollastonite; glass spheres such as hollow and solid glass spheres, silicate spheres, cenospheres, aluminosilicate (armospheres), and the like; kaolin, including hard kaolin, soft kaolin, calcined kaolin, kaolin comprising various coatings known in the art to facilitate compatibility with the polymeric matrix resin, and the like; single crystal fibers or "whiskers" such as silicon carbide, alumina, boron carbide, iron, nickel, copper, and the like; fibers (including continuous and chopped fibers) such as asbestos, carbon fibers, glass fibers, such as E, A, C, ECR, R, S, D, or NE glasses, and the like; sulfides such as molybdenum sulfide, zinc sulfide and the like; barium species such as barium titanate, barium ferrite, barium sulfate, heavy spar, and the like; metals and metal oxides such as particulate or fibrous aluminum, bronze, zinc, copper and nickel and the like; flaked fillers such as glass flakes, flaked silicon carbide, aluminum diboride, aluminum flakes, steel flakes and the like; fibrous fillers, for example short inorganic fibers such as those derived from blends comprising at least one of aluminum silicates, aluminum oxides, magnesium oxides, and calcium sulfate hemihydrate and the like; natural fillers and reinforcements, such as wood flour obtained by pulverizing wood, fibrous products such as cellulose, cotton, sisal, jute, starch, cork flour, lignin, ground nut shells, corn, rice grain husks and the like; organic fillers such as polytetratluoroethylene (Teflon™) and the like; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) and the like; as well as additional fillers and reinforcing agents such as mica, clay, feldspar, flue dust, fillite, quartz, quartzite, perlite, tripoli, diatomaceous earth, carbon black, and the like, and combinations comprising at least one of the foregoing fillers and reinforcing agents. The fillers/reinforcing agents may be coated to prevent reactions with the matrix or may be chemically passivated to neutralize catalytic degradation site that might promote hydrolytic or thermal degradation.

The fillers and reinforcing agents may be coated with a layer of metallic material to facilitate conductivity, or surface treated with silanes to improve adhesion and dispersion with the polymeric matrix resin. In addition, the reinforcing fillers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber and the like. Fibrous fillers may be supplied in the form of, for example, rovings, woven fibrous reinforcements, such as 0-90 degree fabrics and the like; non-woven fibrous reinforcements such as continuous strand mat, chopped strand mat, tissues, papers and felts and the like; or three-dimensional reinforcements such as braids. Fillers are generally used in amounts of about 0 to about 100 parts by weight, based on 100 parts by weight of the total composition.

Suitable antioxidant additives include, for example, alkylated monophenols or polyphenols; alkylated reaction products of polyphenols with dienes, such as tetrakis[methylene(3,5-di-tert-butyl-4-hydroxyhydrocinnamate)] methane, and the like; butylated reaction products of para-cresol or dicyclopentadiene; alkylated hydroquinones; hydroxylated thiodiphenyl ethers; alkylidene-bisphenols; benzyl species; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; and the like; and combinations comprising at least one of the foregoing antioxidants. Antioxidants are generally used in amounts of about 0.01 to about 1, specifically about 0.1 to about 0.5 parts by weight, based on 100 parts by weight of parts by weight of the total composition.

Suitable heat and color stabilizer additives include, for example, organophosphites such as tris(2,4-di-tert-butyl phenyl) phosphite. Heat and color stabilizers are generally used in amounts of about 0.01 to about 5, specifically about 0.05 to about 0.3 parts by weight, based on 100 parts by weight of the total composition.

Suitable secondary heat stabilizer additives include, for example thioethers and thioesters such as pentaerythritol tetrakis (3-(dodecylthio)propionate), pentaerythritol tetrakis[3-(3,5-di-tert-butyl-4-hydroxyphenyl)propionate], dilauryl thiodipropionate, distearyl thiodipropionate, dimyristyl thiodipropionate, ditridecyl thiodipropionate, pentaerythritol octylthiopropionate, dioctadecyl disulphide, and the like, and combinations comprising at least one of the foregoing heat stabilizers. Secondary stabilizers are generally used in amount of about 0.01 to about 5, specifically about 0.03 to about 0.3 parts by weight, based upon 100 parts by weight of parts by weight of the total composition.

Light stabilizers, including ultraviolet light (UV) absorbing additives, may also be used. Suitable stabilizing additives of this type include, for example, benzotriazoles and hydroxybenzotriazoles such as 2-(2-hydroxy-5-methylphenyl)benzotriazole, 2-(2-hydroxy-5-tert-octylphenyl)-benzotriazole, 2-(2H-benzotriazol-2-yl)-4-(1,1,3,3-tetramethylbutyl)-phenol (CYASORB™ 5411 from Cytec), and TINUVIN™ 234 from Ciba Specialty Chemicals; hydroxybenzotriazines; hydroxyphenyl-triazine or - pyrimidine UV absorbers such as TINUVIN™ 1577 (Ciba), and 2-[4,6-bis(2,4-dimethylphenyl)-1,3,5-triazin-2-yl]- 5-(octyloxy)-phenol (CYASORB™ 1164 from Cytec); non-basic hindered amine light stabilizers (hereinafter "HALS"), including substituted piperidine moieties and oligomers thereof, for example 4-piperidinol derivatives such as TINUVIN™ 622 (Ciba), GR-3034, TINUVIN™ 123, and TINUVIN™ 440; benzoxazinones, such as 2,2'-(1,4-phenylene)bis(4H-3,1-benzoxazin-4-one) (CYASORB™ UV-3638); hydroxybenzophenones such as 2-hydroxy-4-n-octyloxybenzophenone (CYASORB™ 531); oxanilides; cyanoacrylates such as 1,3-bis[(2-cyano-3,3-diphenylacryloyl)oxy]-2,2-bis[[(2-cyano-3,3-diphenylacryloyl)oxy]methyl]propane (UVINUL™ 3030) and 1,3-bis[(2-cyano-3,3-diphenylacryloyl)oxy] -2,2-bis[[(2-cyano-3,3-diphenylacryloyl)oxy]methyl]propane; and nano-size inorganic materials such as titanium oxide, cerium oxide, and zinc oxide, all with particle size less than about 100 nanometers; and the like, and combinations comprising at least one of the foregoing stabilizers. Light stabilizers may be used in amounts of about 0.01 to about 10, specifically about 0.1 to about 1 parts by weight, based on 100 parts by weight of parts by weight of the total composition. UV absorbers are generally used in amounts of about 0.1 to about 5 parts by weight, based on 100 parts by weight of the total composition.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax and the like; and poly alpha olefins such as Ethylflo™ 164, 166, 168, and 170. Such materials are generally used in amounts of about 0.1 to about 20 parts by weight, specifically about 1 to about 10 parts by weight, based on 100 parts by weight of the total composition.

Colorants such as pigment and/or dye additives may also be present. Suitable pigments include for example, inorganic pigments such as metal oxides and mixed metal oxides such as zinc oxide, titanium dioxides, iron oxides and the like; sulfides such as zinc sulfides, and the like; aluminates; sodium sulfo-silicates sulfates, chromates, and the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, and combinations comprising at least one of the foregoing pigments. Pigments may be coated to prevent reactions with the matrix or may be chemically passivated to neutralize catalytic degradation site that might promote hydrolytic or thermal degradation. Pigments are generally used in amounts of about 0.01 to about 10 parts by weight, based on 100 parts by weight of the total composition.

Suitable dyes are generally organic materials and include, for example, coumarin dyes such as coumarin 460 (blue), coumarin 6 (green), nile red and the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, and the like; luminescent dyes such as 5-amino-9-diethyliminobenzo(a)phenoxazonium perchlorate; 7-amino-4-methylcarbostyryl; 7-amino-4-methylcoumarin; 7-amino-4-trifluoromethylcoumarin; 3-(2'-benzimidazolyl)-7-N,N-diethylaminocoumarin; 3-(2'-benzothiazolyl)-7-diethylaminocoumarin; 2-(4-biphenylyl)-5-(4-t-butylphenyl)-1,3,4-oxadiazole; 2-(4-biphenylyl)-5-phenyl-1,3,4-oxadiazole; 2-(4-biphenyl)-6-phenylbenzoxazole-1,3; 2,5-bis-(4-biphenylyl)-1,3,4-oxadiazole; 2,5-bis-(4-biphenylyl)-oxazole; 4,4'-bis-(2-butyloctyloxy)-p-quaterphenyl; p-bis(o-methylstyryl)-benzene; 5,9-diaminobenzo(a)phenoxazonium perchlorate; 4-dicyanomethylene-2-methyl-6-(p-dimethylaminostyryl)-4H-pyran; 1,1'-diethyl-2,2'-carbocyanine iodide; 1,1'-diethyl-4,4'-carbocyanine iodide; 3,3'-diethyl-4,4',5,5'-dibenzothiatricarbocyanine iodide; 1,1'-diethyl-4,4'-dicarbocyanine iodide; 1,1'-diethyl-2,2'-dicarbocyanine iodide; 3,3'-diethyl-9,11 - neopentylenethiatricarbocyanine iodide; 1,3'-diethyl-4,2'-quinolyloxacarbocyanine iodide; 1,3'-diethyl-4,2'-quinolylthiacarbocyanine iodide; 3-diethylamino-7-diethyliminophenoxazonium perchlorate; 7-diethylamino-4-methylcoumarin; 7-diethylamino-4-trifluoromethylcoumarin; 7-diethylaminocoumarin; 3,3'-diethyloxadicarbocyanine iodide; 3,3'-diethylthiacarbocyanine iodide; 3,3'-diethylthiadicarbocyanine iodide; 3,3'-diethylthiatricarbocyanine iodide; 4,6-dimethyl-7-ethylaminocoumarin; 2,2'-dimethyl-p-quaterphenyl; 2,2-dimethyl-p-terphenyl; 7-dimethylamino-1 -methyl-4-methoxy-8-azaquinolone-2; 7-dimethylamino-4-methylquinolone-2; 7-dimethylamino-4-tritluoromethylcoumarin; 2-(4-(4-dimethylaminophenyl)-1,3-butadienyl)-3-ethylbenzothiazolium perchlorate; 2-(6-(p-dimethylaminophenyl)-2,4-neopentylene-1,3,5-hexatrienyl)-3- methylbenzothiazolium perchlorate; 2-(4-(p-dimethylaminophenyl)-1,3-butadienyl)-1,3,3-trimethyl-3H-indolium perchlorate; 3,3'-dimethyloxatricarbocyanine iodide; 2,5-diphenylfuran; 2,5-diphenyloxazole; 4,4'-diphenylstilbene; 1-ethyl-4-(4-(p-dimethylaminophenyl)-1,3-butadienyl)-pyridinium perchlorate; 1-ethyl-2-(4-(p-dimethylaminophenyl)-1,3-butadienyl)-pyridinium perchlorate; 1-ethyl-4-(4-(p-dimethylaminophenyl)-1,3-butadienyl)-quinolium perchlorate; 3-ethylamino-7-ethylimino-2,8-dimethylphenoxazin-5-ium perchlorate; 9-ethylamino-5-ethylaniino- 1 0-niethyl-5H-benzo(a) phenoxazonium perchlorate; 7-ethylanino-6-methyl-4-trifluoromethylcoumarin; 7-ethylamino-4-trifluoromethylcoumarin; 1,1',3,3,3',3'-hexamethyl-4,4',5,5'-dibenzo-2,2'-indotricarboccyanine iodide; 1,1',3,3,3',3'-hexamethylindodicarbocyanine iodide; 1,1',3,3,3',3'-hexamethylindotricarbocyanine iodide; 2-methyl-5-t-butyl-p-quaterphenyl; N-methyl-4-trifluoromethylpiperidino-<3,2-g>coumarin; 3-(2'-N-methylbenzinudazolyl)-7-N,N-diethylaminocoumarin; 2-(1-naphthyl)-5-phenyloxazole; 2,2'-p-phenylen-bis(5-phenyloxazole); 3,5,3"",5""-tetra-t-butyl-p-sexiphenyl; 3,5,3"",5""-tetra-t-butyl-p-quinquephenyl; 2,3,5,6-1H,4H-tetrahydro-9-acetylquinolizino-<9,9a,1-gh>coumarin; 2,3,5,6-1H,4H-tetrahydro-9-carboethoxyquinolizino-<9,9a,1-gh> coumarin; 2,3,5,6-1H,4H-tetrahydro-8-methylquinolizino-<9,9a, 1-gh> coumarin; 2,3,5,6-1H,4H-tetrahydro-9-(3-pyridyl)-quinolizino-<9,9a,1-gh> coumarin; 2,3,5,6-1H,4H-tetrahydro-8-trifluoromethylquinolizino-<9,9a, 1-gh> coumarin; 2,3,5,6-1H,4H-tetrahydroquinolizino-<9,9a,1-gh>coumarin; 3,3',2",3"'-tetramethyl-p-quaterphenyl; 2,5,2"",5"'-tetramethyl-p-quinquephenyl; P-terphenyl; P-quaterphenyl; nile red; rhodamine 700; oxazine 750; rhodamine 800; IR 125; IR 144; IR 140; IR 132; IR 26; IR5; diphenylhexatriene; diphenylbutadiene; tetraphenylbutadiene; naphthalene; anthracene; 9,10-diphenylanthracene; pyrene; chrysene; rubrene; coronene; phenanthrene and the like, and combinations comprising at least one of the foregoing dyes. Dyes are generally used in amounts of about 0.1 parts per million to about 10 parts by weight, based on 100 parts by weight of the total composition.

Monomeric, oligomeric, or polymeric antistatic additives that may be sprayed onto the article or processed into the thermoplastic composition may be advantageously used. Examples of monomeric antistatic agents include long chain esters such as glycerol monostearate, glycerol distearate, glycerol tristearate, and the like, sorbitan esters, and ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate and the like, fluorinated alkylsulfonate salts, betaines, and the like. Combinations of the foregoing antistatic agents may be used. Exemplary polymeric antistatic agents include certain polyetheresters, each containing polyalkylene glycol moieties such as polyethylene glycol, polypropylene glycol, polytetramethylene glycol, and the like. Such polymeric antistatic agents are commercially available, and include, for example PELESTAT™ 6321 (Sanyo), PEBAX™ MH1657 (Atofina), and IRGASTAT™ P18 and P22 (Ciba-Geigy). Other polymeric materials that may be used as antistatic agents are inherently conducting polymers such as polythiophene (commercially available from Bayer), which retains some of its intrinsic conductivity after melt processing at elevated temperatures. In one embodiment, carbon fibers, carbon nanofibers, carbon nanotubes, carbon black or any combination of the foregoing may be used in a polymeric resin containing chemical antistatic agents to render the composition electrostatically dissipative. Antistatic agents are generally used in amounts of about 0.1 to about 10 parts by weight, specifically about based on 100 parts by weight of the total composition.

Anti-drip agents may also be used, for example a fibril forming or non-fibril forming fluoropolymer such as polytetrafluoroethylene (PTFE). The anti-drip agent may be encapsulated by a rigid copolymer as described above, for example SAN. PTFE encapsulated in SAN is known as TSAN. Encapsulated fluoropolymers may be made by polymerizing the encapsulating polymer in the presence of the fluoropolymer, for example an aqueous dispersion. TSAN may provide significant advantages over PTFE, in that TSAN may be more readily dispersed in the composition. A suitable TSAN may comprise, for example, about 50 wt.% PTFE and about 50 wt.% SAN, based on the total weight of the encapsulated fluoropolymer. The SAN may comprise, for example, about 75 wt.% styrene and about 25 wt.% acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer. Antidrip agents are generally used in amounts of about 0.1 to about 10 parts by weight, based on 100 parts by weight of the total composition.

The thermoplastic compositions may be manufactured by methods generally available in the art, for example, in one embodiment, in one manner of proceeding, powdered polycarbonate or polycarbonates, optional impact modifier, and/or other optional components are first blended, optionally with fillers in a Henschel™ high speed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestuffer. Such additives may also be compounded into a masterbatch with a desired polymeric resin and fed into the extruder. The additives may be added to either the polycarbonate base materials or the impact modifier base material to make a concentrate, before this is added to the final product. The extruder is generally operated at a temperature higher than that necessary to cause the composition to flow, typically 500°F (260°C) to 650°F (343°C). The extrudate is immediately quenched in a water batch and pelletized. The pellets, so prepared, when cutting the extrudate may be one-fourth inch long or less as desired. Such pellets may be used for subsequent molding, shaping, or forming.

Shaped, formed, or molded articles comprising the thermoplastic compositions are also provided. The thermoplastic compositions may be molded into useful shaped articles by a variety of means such as injection molding, extrusion, rotational molding, blow molding and thermoforming to form articles such as, for example, computer and business machine housings such as housings for monitors, handheld electronic device housings such as housings for cell phones, battery packs, electrical connectors, and components of lighting fixtures, televisions, ornaments, home appliances, roofs, greenhouses, sun rooms, swimming pool enclosures, and the like,

The compositions find particular utility in electronics, business equipment and equipment housings, such as televisions, computers, notebook computers, cell phones, battery packs, Personal Data Assistants (PDAs), printers, copiers, projectors, facsimile machines, wireless devices, digital cameras and camera housings, television bezels, and other equipment and devices known in the art.

Multi-Axial Impact (MAI) was measured according to ISO 6603 using a plaque 3.2 mm thick, 10 centimeters diameter, with a dart diameter of 12.5 mm at 4.4 m/s. The results represent the ductility reported in %. This procedure provides information on how a material behaves under multiaxial deformation conditions. The deformation applied is a high speed puncture. The final test result is calculated as the average of the test results of five test plaques.

Vicat Softening Temperature (ISO 306) is a measure of the temperature at which a plastic starts to soften rapidly. A round, flat-ended needle of 1 mm² cross section penetrates the surface of a plastic test specimen under a predefined load, and the temperature is raised at a uniform rate. The Vicat softening temperature, or VST, is the temperature at which the penetration reaches 1 mm. ISO 306 describes two methods: Method A - load of 10 Newtons (N), and Method B - load of 50 N, with two possible rates of temperature rise: 50°C/hour (°C/h) or 120°C/h. This results in ISO values quoted as A/50, A/120, B/50 or B/120. The test assembly is immersed in a heating bath with a starting temperature of 23°C. After 5 minutes (min) the load is applied: 10 N or 50 N. The temperature of the bath at which the indenting tip has penetrated by 1 ± 0.01 mm is reported as the VST of the material at the chosen load and temperature rise.

Melt Volume Rate (MVR) was determined at 260°C using a 5-kilogram weight over 10 minutes in accordance with ISO 1133.

Izod Impact Strength (or Notched Izod Impact Strength) ISO 180 ('NII') is used to compare the impact resistances of plastic materials. Izod Impact was determined using a 4 mm thick, molded Izod notched impact (INI) bar. It was determined per ISO 180/1A. The ISO designation reflects type of specimen and type of notch: ISO 180/1A means specimen type 1 and notch type A. The ISO results are defined as the impact energy in joules used to break the test specimen, divided by the specimen area at the notch. Results are reported in kJ/m².

Scratch Resistance was evaluated per ISO 1518 by dragging a stylus pin (conical needle shape) on the surface of injection molded plaques made from the example compositions at a constant load of 6N. The depth of the scratch produced is measured and reported as the depth in microns. Shallower scratches (lower scratch depths) indicate better scratch resistance.

The invention is further illustrated by the following non-limiting Examples,

Samples were prepared by melt extrusion on a Werner & Pfleiderer 25 mm twin screw extruder, using a nominal melt temperature of 250 to 275°C, 25 inches (635 mm) of mercury vacuum and 450 rpm. The extrudate was pelletized and dried at about 100°C for about 4 hours.

To make test specimens, the dried pellets were injection molded on an Engel 100-ton injection molding machine at a nominal temperature of 250 to 290°C to form specimens for most of the tests below. Specimens were tested in accordance with ASTM or ISO standards as described above.

**Table 1**

| Component | Type | Source |
|---|---|---|
| PC-1 | BPA polycarbonate resin process with an MVR at 300°C/1.2kg, of 5.1-6.9 g/10 min. | SABIC Innovative Plastics (formerly GE Plastics) |
| PC-2 | DMBPC copolymer comprising 50 mol% DMBPC and 50 mol.% BPA polycarbonate with an MVR at 300°C/1.2kg, of 11-15 g/10 min. | SABIC Innovative Plastics (formerly GE Plastics) |
| ABS | High rubber graft emulsion polymerized ABS comprising about 11.1 wt.% acrylonitrile and about 38.5 wt.% styrene grafted to about 51 wt.% polybutadiene with a crosslink density of 43-55% | SABIC Innovative Plastics (formerly GE Plastics) |
| PC-Si | Polysiloxane-polycarbonate copolymer comprising 80 wt.% units derived from BPA and 20 wt.% units derived from dimethylsiloxane | SABIC Innovative Plastics (formerly GE Plastics) |
| PMMA | Methyl methacrylate (MMA)-ethyl acrylate (EA) copolymer, comprising about 95.6 mol% MMA and about 4.4 mol% EA | Lucite/Atofina |
| FP | Flow promoter (Low molecular weight hydrocarbon resin made from C₅-C₉ petroleum feedstock) (Arkon® P125) | Arakawa Chemical Inc. |

Samples were produced according to the methods described above using the materials in Table 1, and tested according to the test methods previously described. The sample formulations are shown in Table 2 and test results are shown in Table 3 below.

**Table 2**

| COMPONENTS | Units | 1 | 2 | 3 | 4 | 5 |
|---|---|---|---|---|---|---|
| PC-1 | % | 6.7 | 6.7 | 6.7 | 6.7 | 6.7 |
| PC-2 | % | 0 | 21.0 | 33.5 | 46.0 | 67.0 |
| PMMA | % | 67.0 | 46.0 | 33.5 | 21.0 | 0 |
| ABS | % | 14.0 | 14.0 | 14.0 | 14.0 | 14.0 |
| PC-Si | % | 7.5 | 7.5 | 7.5 | 7.5 | 7.5 |
| FP | % | 4.0 | 4.0 | 4.0 | 4.0 | 4.0 |
| Others* | % | 0.8 | 0.8 | 0.8 | 0.8 | 0.8 |

| | | | | | | |
|---|---|---|---|---|---|---|
| *Additives comprising 0.4 % Irganox™ 1076, 0.1 % Irgafos™ 168 and 0.3 % pentaerythritol tetrastearate | | | | | | |

**Table 3**

| PHYSICAL PROPERTIES | Units | 1 | 2 | 3 | 4 | 5 |
|---|---|---|---|---|---|---|
| Notched Izod Impact, 23°C | KJ/m² | 7.63 | 16.55 | 23.48 | 27.34 | 32.49 |
| MVR 260°C 5kg | cm³/10 min | 30.04 | 18.83 | 13.58 | 9.92 | 6.04 |
| MAI, 23°C, ductility | % | 0 | 0 | 100 | 100 | 100 |
| Vicat B/50 | °C | 99.55 | 105.95 | 111.25 | 118.85 | 129.70 |
| Scratch 6N/conical | N/m m² | 17.8 | 14.6 | 15.7 | 16.5 | 18.3 |

Additional samples were prepared in the same manner as above and tested for scratch resistance. The samples in Table 4 are blends of the DMBPC copolymer with PMMA at varying ratios to test the scratch resistance variation. The samples in Table 5 are blends of DBMPC copolymer, PMMA and only one impact modifier, at varying levels, to test the scratch resistance variation and multi-axial impact ductility at 23°C. Scratch and ductility results and the amounts used are shown in Tables 4 and 5 below.

**Table 4**

| COMPONENTS | Units | 6 | 7 | 8 | 9 | 10 |
|---|---|---|---|---|---|---|
| PC-1 | % | 0 | 0 | 0 | 0 | 0 |
| PC-2 | % | 0 | 25.0 | 50.0 | 75.0 | 100.0 |
| PMMA | % | 100.0 | 75.0 | 50.0 | 25.0 | 0 |
| PHYSICAL PROPERTIES | Units | | | | | |
| Scratch 6N/conical | N/m m² | 12.0 | 7.8 | 8.2 | 11.6 | 16.2 |
| MAI, 23°C, ductility | % | 0 | 0 | 0 | 0 | 0 |

**Table 5**

| COMPONENTS | Units | 11 | 12 | 13 | 14 | 15 | 16 | 17 | 18 | 19 | 20 |
|---|---|---|---|---|---|---|---|---|---|---|---|
| PC-2 | % | 0 | 21.5 | 43.0 | 64.5 | 86.0 | 0 | 23.1 | 46.25 | 69.4 | 92.5 |
| PMMA | % | 86.0 | 64.5 | 43.0 | 21.5 | 0 | 92.5 | 69.4 | 46.25 | 23.1 | 0 |
| ABS | % | 14.0 | 14.0 | 14.0 | 14.0 | 14.0 | 0 | 0 | 0 | 0 | 0 |
| PC-Si | % | 0 | 0 | 0 | 0 | 0 | 7.5 | 7.5 | 7.5 | 7.5 | 7.5 |
| PHYSICAL PROPERTIES | Units | | | | | | | | | | |
| Scratch 6N/conical | N/m m² | 30.6 | 27.1 | 27.4 | 18.1 | 15.4 | 18.9 | 21.8 | 10.2 | 11.3 | 13.0 |
| MAI, 23°C, ductility | % | 0 | 0 | 0 | 20 | 100 | 0 | 0 | 0 | 0 | 0 |

| | | | | | | | | | | | |
|---|---|---|---|---|---|---|---|---|---|---|---|
| Note: 30.0 is the maximum meaningful measurement with this test on this device. | | | | | | | | | | | |

Examples 1 to 5 show that compositions having both PC-2 and PMMA, as well as a combination of impact modifiers (ABS and polycarbonate-polysiloxane copolymer) have better scratch performance than the compositions having only one of PC-2 or PMMA and the impact modifiers (compare Examples 2, 3 and 4 to 1 (no PC-2) and 5 (no PMMA).

The above results additionally illustrate that samples having a combination of PC-2 (the DMBPC copolymer) and PMMA (the poly(alkyl(meth)acrylate)) have better scratch performance than either the PC-2 or PMMA alone (compare Examples 7, 8 and 9 (blends of PC-2 and PMMA) with 6 (100% PMMA) and 10 (100% PC-2)). Additionally, none of samples 6 to 10, which have no impact modifier in the composition, are ductile, as shown by the Multi-axial Impact Ductility results.

Additionally, when polycarbonate-polysiloxane copolymer is added to blends of PC-2 and PMMA, the scratch performance is still good, particularly when more than 25 wt.% of PC-2 is used (compare Example 16 to Examples 17 and 18). It seems to be best when approximately equal amounts of PC-2 and PMMA are used.

When ABS is added to blends of PC-2 and PMMA, the scratch performance is not very good, likely due to the rubber content of the ABS, which is soft and known not to provide good scratch performance. Example 14, which has less than 25% PMMA, had the best performance, but it was very variable, as seen by the two results, and still considerably higher than any of the examples with the combination of ABS and polycarbonate-polysiloxane copolymer as an impact modifier or only the polycarbonate-polysiloxane alone as an impact modifier (compare Examples 12 to 14 with Examples 1 to 5).

There appears to be a synergistic effect between the PC-2, PMMA, ABS and polycarbonate-polysiloxane copolymer, as shown by the Examples, and described above. This synergistic effect is evident in both the scratch and the ductility results.

As used herein, the terms "first," "second," and the like do not denote any order or importance, but rather are used to distinguish one element from another, and the terms "the", "a" and "an" do not denote a limitation of quantity, but rather denote the presence of at least one of the referenced item. All ranges disclosed herein for the same properties or amounts are inclusive of the endpoints, and each of the endpoints is independently combinable. All cited patents, patent applications, and other references are incorporated herein by reference in their entirety.

The modifier "about" used in connection with a quantity is inclusive of the stated value and has the meaning dictated by the context (e.g., includes the degree of error associated with measurement of the particular quantity).

"Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A thermoplastic composition comprising in combination
from 20 to 80 wt.% of a polycarbonate homopolymer or copolymer comprising repeat carbonate units having the following structure (17): 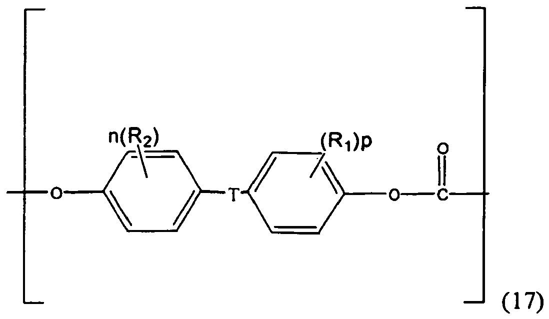 wherein R₁ and R₂ are independently at each occurrence a C₁-C₆ alkyl, T is selected from the group consisting of C5-C10 cycloalkanes attached to the aryl groups at one or two carbons, C6-C13 aryl groups, and C7-C13 aryl alkyl groups, n is an integer having a value of 0 to 4, and p is an integer having a value of 1 to 4; or T is a C1-C5 alkyl group, n is an integer having a value of 0,2, 3 or 4, and p is an integer having a value of 1 to 4,
from 20 to 80 wt.% of a poly(alkyl(meth)acrylate), wherein the alkyl group has 1 or 2 carbons atoms.

2. The thermoplastic composition of claim 1 comprising in combination
from 20 to 70 wt.% of a polycarbonate homopolymer or copolymer comprising repeat carbonate units having structure (17):
from 20 to 70 wt.% of a poly(alkyl(meth)acrylate), wherein the alkyl group is straight -chain, and has 1 or 2 carbons atoms; and
from 10 to 30 wt.% of an impact modifier or combination of impact modifiers.

3. The thermoplastic composition of claim 1 or 2, wherein the repeat carbonate units of formula (17) have the following structure: 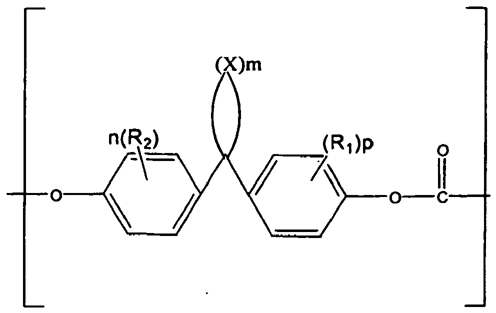 wherein R₁ and R₂ are independently selected from the group consisting of C₁-C₆ alkyl; X represents CH₂; m is an integer from 4 to 9; n is an integer from 1 to 4; and p is an integer from 1 to 4, with the proviso that at least one of R₁ or R₂ is in the 3 or 3' position.

4. The thermoplastic composition of claim 3, wherein the repeat carbonate units of the copolymer have the structure

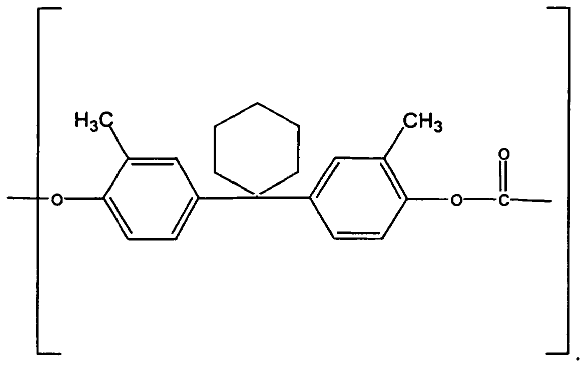

5. The thermoplastic composition of claim 1, further comprising an impact modifier wherein the impact modifier is ABS, MBS, ASA, polycarbonate-polysiloxane copolymer, or a combination of two or more of the foregoing impact modifiers.

6. The thermoplastic composition of any one of the previous claims, further comprising a flow promoter comprising a low molecular weight hydrocarbon resin derived from petroleum C₅ to C₉ feedstock

7. The thermoplastic composition of any of the previous claims, wherein the poly(alkyl(meth)acrylate) is PMMA.

8. The thermoplastic composition of any of claims 2-7, wherein the impact modifier is ABS.

9. The thermoplastic composition of any of claims 2-7, wherein the impact modifier is polycarbonate-polysiloxane copolymer.

10. The thermoplastic composition of any of claims 2-7, wherein the impact modifier is ABS and polycarbonate-polysiloxane copolymer.

11. The thermoplastic composition of any of the previous claims, further comprising a polycarbonate homopolymer or copolymer different from the polycarbonate having repeat carbonate units having the structure (17).

12. The thermoplastic composition of any of the previous claims, further comprising a flame retardant.

13. An article comprising the thermoplastic composition of any of the previous claims.

14. The article of claim 13, wherein the article has a scratch resistance of less than 17 when measured according to ISO 1518.

15. The article of claim 14, wherein the article has a scratch resistance of less than 12 when measured according to ISO 1518.

## Patentansprüche

1. Eine thermoplastische Zusammensetzung, umfassend, in Kombination:
von 20 bis 80 Gewichtsprozent eines Polycarbonat-Homopolymers oder -Copolymers umfassend sich wiederholende Carbonateinheiten mit der folgenden Struktur (17): 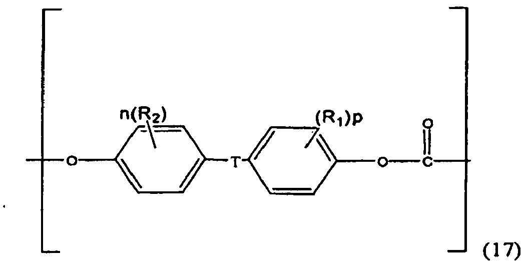 worin R₁ und R₂ unabhängig bei jedem Vorkommen ein C₁-C₆ Alkyl sind, T ist gewählt aus der Gruppe bestehend aus C₅-C₁₀ Cycloalkanen angeheftet an die Arylgruppen an einem oder zwei Kohlenstoffen, C₆-C₁₃ Arylgruppen, und C₇-C₁₃ Arylalkylgruppen, n ist eine ganze Zahl mit einem Wert von 0 bis 4, und p ist eine ganze Zahl mit einem Wert von 1 bis 4; oder T ist eine C₁-C₅ Alkylgruppe, n ist eine ganze Zahl mit einem Wert von 0, 2, 3 oder 4 und p ist eine ganze Zahl mit einem Wert von 1 bis 4,
von 20 bis 80 Gewichtsprozent eines Poly(alkyl(meth)acrylats), worin die Alkylgruppe 1 oder 2 Kohlenstoffatome hat.

2. Die thermoplastische Zusammensetzung gemäß Anspruch 1, umfassend, in Kombination:
von 20 bis 70 Gewichtsprozent eines Polycarbonat-Homopolymers oder -Copolymers umfassend sich wiederholende Carbonateinheiten mit der Struktur (17):
von 20 bis 70 Gewichtsprozent eines Poly(alkyl(meth)acrylats), worin die Alkylgruppe geradekettig ist und 1 oder 2 Kohlenstoffatome hat; und
von 10 bis 30 Gewichtsprozent eines Schlagfestmodifikators oder einer Kombination aus Schlagfestmodifikatoren.

3. Die thermoplastische Zusammensetzung gemäß Anspruch 1 oder 2, worin die sich wiederholenden Carbonateinheiten der Formel (17) die folgende Struktur haben: 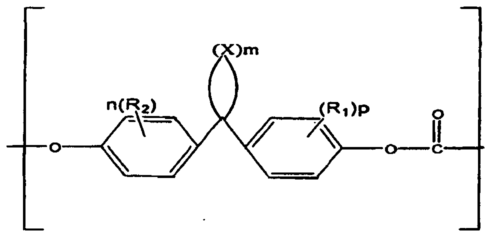 worin R₁ und R₂ unabhängig gewählt sind aus der Gruppe bestehend aus C₁-C₆ Alkyl; X stellt CH₂ dar; m ist eine ganze Zahl von 4 bis 9; n ist eine ganze Zahl von 1 bis 4; und p ist eine ganze Zahl von 1 bis 4, unter der Voraussetzung, dass mindestens eines von R₁ oder R₂ in der 3- oder 3'-Position ist.

4. Die thermoplastische Zusammensetzung gemäß Anspruch 3, worin die sich wiederholenden Carbonateinheiten des Copolymers folgende Struktur haben:

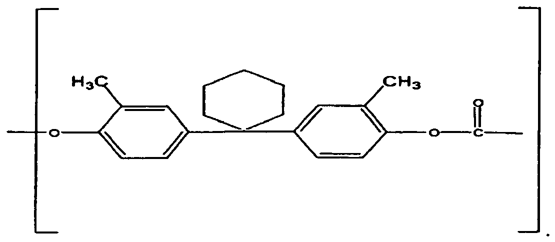

5. Die thermoplastische Zusammensetzung gemäß Anspruch 1, weiter einen Schlagfestmodifikator umfassend, worin der Schlagfestmodifikator ABS, MBS, ASA, Polycarbonat-Polysiloxan Copolymer, oder eine Kombination aus zwei oder mehreren der zuvor genannten Schlagfestmodifikatoren ist.

6. Die thermoplastische Zusammensetzung gemäß irgendeinem der vorhergehenden Ansprüche, weiter umfassend eine Fließhilfe, die ein Kohlenwasserstoffharz mit niedrigem Molekulargewicht umfasst, das abgeleitet ist von Petroleum C₅ bis C₉ Ausgangsmaterial.

7. Die thermoplastische Zusammensetzung gemäß irgendeinem der vorhergehenden Ansprüche, worin das Poly(alkyl(meth)acrylat) PMMA ist.

8. Die thermoplastische Zusammensetzung gemäß irgendeinem der Ansprüche 2-7, worin der Schlagfestmodifikator ABS ist.

9. Die thermoplastische Zusammensetzung gemäß irgendeinem der Ansprüche 2-7, worin der Schlagfestmodifikator Polycarbonat-Polysiloxan Copolymer ist.

10. Die thermoplastische Zusammensetzung gemäß irgendeinem der Ansprüche 2-7, worin der Schlagfestmodifikator ABS und Polycarbonat-Polysiloxan Copolymer ist.

11. Die thermoplastische Zusammensetzung gemäß irgendeinem der vorhergehenden Ansprüche, weiter ein Polycarbonat-Homopolymer oder -Copolymer umfassend, das sich von dem Polycarbonat unterscheidet, welches sich wiederholende Carbonateinheiten mit der Struktur (17) hat.

12. Die thermoplastische Zusammensetzung gemäß irgendeinem der vorhergehenden Ansprüche, weiter ein Flammschutzmittel umfassend.

13. Ein Artikel umfassend die thermoplastische Zusammensetzung gemäß irgendeinem der vorhergehenden Ansprüche.

14. Der Artikel gemäß Anspruch 13, worin der Artikel eine Ritzhärte von weniger als 17 hat, gemessen nach ISO 1518.

15. Der Artikel gemäß Anspruch 14, worin der Artikel eine Ritzhärte von weniger als 12 hat, gemessen nach ISO 1518.

## Revendications

1. Composition thermoplastique comprenant, en combinaison,
de 20 à 80 % en poids d'un homopolymère ou d'un copolymère de polycarbonate comprenant une répétition de motifs de carbonate ayant la structure suivante (17) : 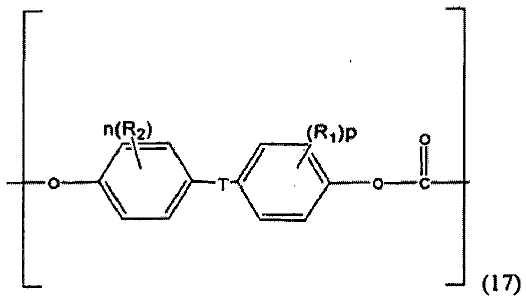 dans laquelle R₁ et R₂ sont, indépendamment l'un de l'autre, un groupe alkyle en C₁ à C₆, T est choisi dans le groupe constitué par les cycloalcanes en C₅ à C₁₀ attachés à des groupes aryle au niveau d'un ou deux atomes de carbone, les groupes aryle en C₆ à C₁₃, et les groupes arylalkyle en C₇ à C₁₃, n est un entier ayant une valeur de 0 à 4, et p est un entier ayant une valeur de 1 à 4 ; ou T est un groupe alkyle en C₁ à C₅, n est un entier ayant une valeur de 0, 2, 3 ou 4, et p est un entier ayant une valeur de 1 à 4,
de 20 à 80 % en poids d'un poly((méth)acrylate d'alkyle), dans lequel le groupe alkyle comprend 1 ou 2 atomes de carbone.

2. Composition thermoplastique selon la revendication 1, comprenant, en combinaison
de 20 à 70 % en poids d'un homopolymère ou d'un copolymère de polycarbonate comprenant une répétition de motifs de carbonate ayant la structure suivante (17) ;
de 20 à 70 % en poids d'un poly((méth)acrylate d'alkyle), dans lequel le groupe alkyle est une chaîne linéaire comprend 1 ou 2 atomes de carbone ; et
de 10 à 30 % en poids d'un modificateur d'impact ou d'une combinaison de modificateurs d'impact.

3. Composition thermoplastique selon la revendication 1 ou 2, dans laquelle les motifs de carbonate répétés de formule (17) ont la structure suivante : 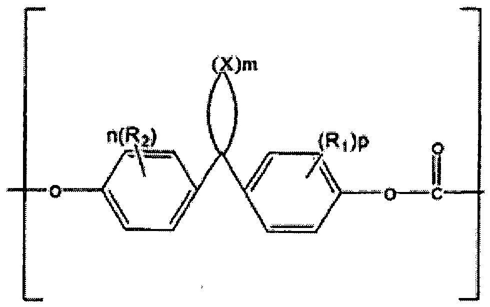 dans laquelle R₁ et R₂ sont, indépendamment l'un de l'autre, un groupe alkyle en C₁ à C₆ ; X représente CH₂ ; m est un entier de 4 à 9 ; n est un entier de 1 à 4 ; et p est un entier de 1 à 4, à condition qu'au moins un de R₁ ou R₂ est en position 3 ou 3'.

4. Composition thermoplastique selon la revendication 3, dans laquelle les motifs de carbonate répétés du copolymère ont la structure :

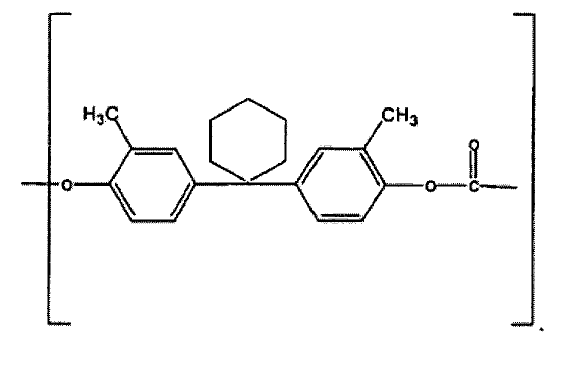

5. Composition thermoplastique selon la revendication 1, comprenant en outre un modificateur d'impact, le modificateur d'impact étant un ABS, un MBS, un ASA, un copolymère de polycarbonate-polysiloxane, ou une combinaison de deux des modificateurs d'impact précédents ou plus.

6. Composition thermoplastique selon l'une quelconque des revendications précédentes, comprenant en outre un promoteur d'écoulement comprenant une résine hydrocarbonée de faible poids moléculaire dérivée d'une charge d'alimentation en C₅ à C₉ de pétrole.

7. Composition thermoplastique selon l'une quelconque des revendications précédentes, dans laquelle le poly((méth)acrylate d'alkyle) est un PMMA.

8. Composition thermoplastique selon l'une quelconque des revendications 2 à 7, dans laquelle le modificateur d'impact est un ABS.

9. Composition thermoplastique selon l'une quelconque des revendications 2 à 7, dans laquelle le modificateur d'impact est un copolymère de polycarbonate-polysiloxane.

10. Composition thermoplastique selon l'une quelconque des revendications 2 à 7, dans laquelle le modificateur d'impact est un ABS et un copolymère de polycarbonate-polysiloxane.

11. Composition thermoplastique selon l'une quelconque des revendications précédentes, comprenant en outre un homopolymère ou un copolymère de polycarbonate différent du polycarbonate ayant des motifs de carbonate répétés de structure (17).

12. Composition thermoplastique selon l'une quelconque des revendications précédentes, comprenant en outre un ignifuge.

13. Article comprenant la composition thermoplastique selon l'une quelconque des revendications précédentes.

14. Article selon la revendication 13, l'article possédant une résistance aux rayures inférieure à 17 lorsqu'elle est mesurée selon la norme ISO 1518.

15. Article selon la revendication 13, l'article possédante une résistance aux rayures inférieure à 12 lorsqu'elle est mesurée selon la norme ISO 1518.
